# EUROPEAN PATENT SPECIFICATION

(11) **EP 2 050 583 B1**
(45) Date of publication and mention of the grant of the patent: **04.12.2013**
(21) Application number: 07792081.7
(22) Date of filing: 07.08.2007
(51) Int. Cl.: B60B 27/00, B21J 5/06, B21K 1/12, F16C 19/18, F16C 33/64

(54) **RACEWAY RING MEMBER FOR BEARING UNIT, BEARING UNIT, AND METHOD AND DEVICE FOR PRODUCING RACEWAY RING MEMBER FOR BEARING UNIT**
LAUFRINGGLIED FÜR EINE LAGEREINHEIT, LAGEREINHEIT UND VERFAHREN UND VORRICHTUNG ZUR HERSTELLUNG EINES LAUFRINGGLIEDS FÜR EINE LAGEREINHEIT
ELEMENT DE BAGUE A CHEMIN DE ROULEMENT POUR UNITE DE PALIER, UNITE DE PALIER ET PROCEDE ET DISPOSITIF DE PRODUCTION D'ELEMENT DE BAGUE A CHEMIN DE ROULEMENT POUR UNITE DE PALIER

(30) Priority: 07.08.2006 JP 2006214744; 21.08.2006 JP 2006224553; 21.08.2006 JP 2006224554; 23.08.2006 JP 2006226849
(43) Date of publication of application: 22.04.2009
(60) Divisional application: 13000962.4
(73) Proprietor: NSK Ltd., Tokyo 141-8560 (JP)
(72) Inventor: KOBAYASHI, Kazuto c/o NSK, Ltd., Fujisawa-shi Kanagawa 251-8501 (JP); YASUDA, Yuu c/o NSK, Ltd., Fujisawa-shi Kanagawa 251-8501 (JP); OOTSUKA, Kiyoshi c/o NSK, Ltd., Fujisawa-shi Kanagawa 251-8501 (JP); NAGANO, Masato c/o NSK, Ltd., Fujisawa-shi Kanagawa 251-8501 (JP); NAGAI, Kenichi c/o NSK, Ltd., Fujisawa-shi Kanagawa 251-8501 (JP); WAKABAYASHI, Tatsuo c/o NSK, Ltd., Fujisawa-shi Kanagawa 251-8501 (JP)
(74) Representative: Grünecker, Kinkeldey, Stockmair & Schwanhäusser
(86) International application number: PCT/JP2007/065412
(87) International publication number: WO 2008/018439

(56) References cited:
- EP-A1- 1 541 377
- EP-A2- 1 647 418
- JP-A- 07 317 755
- JP-A- 2002 087 008
- JP-A- 2004 169 927
- JP-A- 2006 063 355
- JP-A- 2006 111 070
- JP-A- 2006 200 700
- US-A1- 2005 141 798

## Description

### Technical Field

The present invention relates to a bearing unit, and in particular, the bearing unit is used for supporting a wheel rotationally on a suspension system. Note that in the description, a wheel denotes generally all wheels such as not only wheels for motor vehicles but also wheels for railway vehicles.

### Background Art

Conventionally, there have been known various types of bearing units for supporting a wheel of a motor vehicle (for example, a disc wheel) rotationally on a vehicle body (for example, a suspension system (a suspension) (for example, refer to Patent Document No. 1). For example, a bearing unit for a drive wheel is shown in Fig. 16(a), and the bearing unit includes an outer ring (also referred to as a stationary ring, one of raceway rings, and an outside diameter side raceway ring member) 2 which is fixed to the side of the vehicle body and is held in a non-rotating state at all times, a hub (also referred to as a rotational ring, and the other of the raceway rings) 4 which is provided in such a manner as to face an inside of the outer ring 2 and is connected to the side of the wheel in such a manner as to rotate together with the wheel, and double row of rolling elements 6, 8 which are rotationally built in between the outer ring 2 and the hub 4.

In this case, the outer ring 2 is formed into a hollow cylindrical shape and is disposed in such a manner as to cover an outer circumference of the hub 4, seal members (a lip seal 10a on the wheel side, a pack seal 10b on the vehicle body side) are provided between the outer ring 2 and the hub 4 for hermetically sealing off an interior of the bearing unit. In addition, the lip seal 10a is fixed to a wheel-side fixing surface 2n-1 of the outer ring 2 and is positioned slidably relative to a sliding surface 4n- 1 of the hub 4, while the pack seal 10b is fixed to a vehicle body-side fixing surface 2n-2 of the outer ring and is positioned slidably relative to an inner ring 16 (also referred to as a rotational ring constituent element), which will be described later. In addition, while balls are illustrated as the rolling elements 6, 8 in the figure, there may be a case where rollers are used depending upon configurations and types of bearing units.

A connecting flange 2a (also referred to as a fixing flange) is molded monolithically on the outer ring 2 in such a manner as to project outwards from an outer circumferential side thereof. Fixing bolts (not shown) are inserted into fixing holes 2b in the fixing flange 2a to be fastened to the vehicle body side, whereby the outer ring 2 can be fixed to a suspension system (a knuckle), not shown. In addition, a substantially cylindrical hub main body 12 (also referred to as the other of the raceway ring members, an inside diameter side raceway ring member and a spindle), which supports, for example, a disk wheel (not shown) of a motor vehicle and rotates together with the disc wheel, is provided on the hub 4, and a mounting flange 12a (also referred to as a hub flange) to which the disc wheel is fixed is provided on the hub main body 12 in such a manner as to project therefrom.

The mounting flange 12a extends outwards (radially outwards of the hub main body 12) beyond the outer ring 2, and a plurality of hub bolts 14 (also referred to as studs) is provided in the vicinity of an extending edge thereof in such a manner as to be disposed at predetermined intervals along a circumferential direction. In this case, by inserting the plurality of hub bolts 14 into bolt holes (not shown) formed in the disc wheel and being fastened with hub nuts (not shown), the disc wheel can be positioned and fixed to the mounting flange 12a. As this occurs, a radial position of the wheel is implemented by a positioning cylindrical portion (also referred to as a pilot portion) which is provided on a wheel side of the hub main body 12 in such a manner as to project therefrom.

In addition, the annular inner ring 16 (which makes up the hub 4 together with the hub main body 12) is fitted on a vehicle body-side fitting surface 4n-2 of the hub main body 12. In this case, after the inner ring 16 is fitted on the fitting surface 4n-2 to a stepped portion 12b formed thereon in such a state that the rolling elements 6, 8 are held with a cage 18, for example, between the outer ring 2 and the hub 4, a clamping area at a vehicle body-side axial end portion of the hub main body 12 is plastically deformed. Then, the clamping area (axial end portion) 12c is clamped to (is brought into tight contact with) a circumferential end portion 16s of the inner ring 16 therealong, whereby the inner ring can be locked on the hub main body 12.

As this occurs, a state is produced in which a predetermined preload is given to the bearing unit, and in this state, the rolling elements 6, 8 are built in rotationally between the outer ring 2 and the hub 4 so as to be brought into contact with raceway surfaces (outer ring raceway 2s, inner ring raceway 4s) of the outer ring 2 and the hub 4 while forming predetermined contact angles, respectively. In this case, lines of action (not shown) which each connect two contact points intersect the respective raceway surfaces 2s, 4s at right angles while passing through the centers of the rolling elements 6, 8 and intersect each other at one point (a point of action) on a center line of the bearing unit, whereby a back-to-back duplex (DB) bearing is configured.

Note that in the configuration like this, a force acting on the wheel while the motor vehicle is running is all transmitted from the disc wheel to the suspension system via the bearing unit. As this occurs, various types of loads (radial load, axial load, moment load and the like) are caused to act on the bearing unit. However, since the bearing unit is formed into the back-to-back duplex (DB) bearing, high rigidity is maintained with respect to the various types of loads.

In addition, a constant velocity joint (CVJ), not shown, is connected to the bearing unit. Specifically speaking, the constant velocity joint and the bearing unit are connected to each other by bringing an outer ring of the constant velocity joint into abutment with the hub 4 (the clamping area 12c of the hub main body 12) of the bearing unit, causing a spline shaft (not shown) of the constant velocity joint to fit in a spline hole 12h in the hub main body 12 and fixing a leading end of the spline shaft so fitted into the positioning cylindrical portion 12d with a nut (not shown). In this configuration, a driving force of a predetermined torque is transmitted smoothly to the disc wheel via the bearing unit, for example, by a free angular change of the constant velocity joint in association with an angular change of a drive shaft.

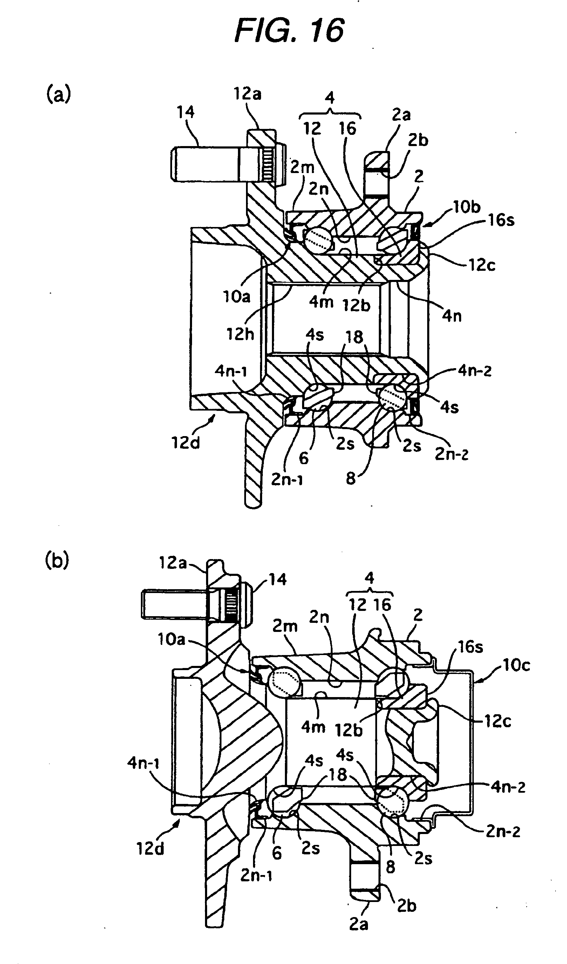

On the other hand, for example, a bearing unit for a driven wheel is shown in Fig. 16(b). In the bearing unit, a spline hole is not provided in a central portion of a hub main body 12. In addition, as seal members for hermetically sealing off an interior of the bearing unit, a cover 10c is provided on the side of a vehicle body in place of the pack seal. The cover 10c is formed into a disc shape so as to hermetically seal off the interior of the bearing unit on the side of the vehicle body from the outside of the bearing unit and is fixed to a fixing surface 2n-2 of an outer ring 2 at a proximal end thereof. Note that since the other configurations of this bearing unit are the same as those of the bearing unit (Fig. 16(a)) for a drive wheel described above, in Fig. 16(b), like reference numerals are given to those like constituent members, and the description thereof will be omitted.

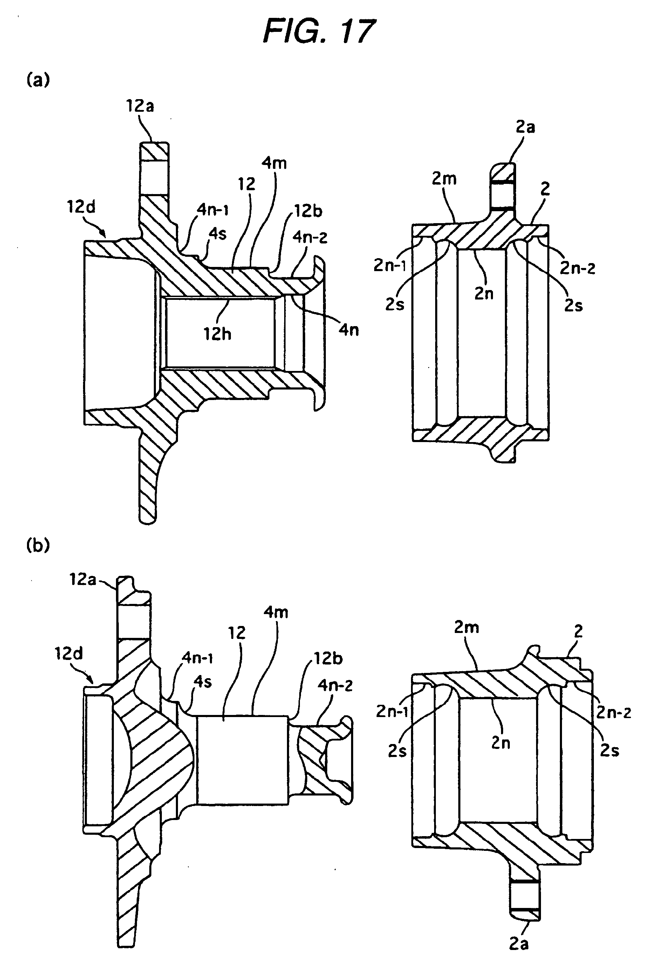

Incidentally, in the bearing units shown in Figs. 16(a) and 16(b), as shown in Figs 17(a) and 17(b), the positioning cylindrical portion 12d is provided on the wheel side of the hub main body 12 which makes up the hub 4, and the mounting flange 12a and the sliding surface 4n-1 of the lip seal 10a, the inner ring raceway 4s and the stepped portion 12b, and the inner ring 16 fitting surface 4n-2 are integrated into the outer circumferential surface 4m of the hub main body 12, whereby the hub main body 12 is formed into the complex configuration.
On the other hand, on the outer ring 2, the connecting flange 2a is integrated into the outer circumferential surface 2m, and the fixing surface 2n-1 of the lip seal 10a or to which the lip seal 10a is fixed and the double row outer ring raceways 2s, and the fixing surface 2n-2 of the seal member (the pack seal 10b in Fig. 16(a), the cover 10c in Fig. 16(b)) or to which the seal member is fixed are integrated into the inner circumferential surface 2n thereof, whereby the outer ring 2 is formed into the complex configuration. In addition, in particular, in the bearing unit for a driving unit in Fig. 16(a), the spline hole 12h is integrated into the inner circumferential surface 4n of the hub main body 12.

Because of this, it has been general practice to form the conventional hub main body 12 through hot forgoing. In addition, the outer ring 2 is formed into the hollow configuration, and hence, separate punching work becomes necessary for punching out a central portion of a material to form the outer ring 2. In this case, since the processing costs are increased, it has also been general practice to form the conventional ring 2 through hot forging.

It is general in forming the raceway rings 2, 4 through hot forging to obtain final configurations thereof through several steps starting with upsetting a material to punching (trimming) the same, and the material is heated up to about 1100°C before the first step so as to maintain a temperature of A3 transformation point (about 800°C) or higher until the end of the final step. In addition, after the completion of the final step, the material is subjected to slow cooling with a view to preventing the increase in hardness of the material in consideration of mechanical working that will be performed on the material following to the final step. In this case, since oxidation or %decarburization is produced on the surface of the material, machining is performed on portions of the material where high dimension accuracy and strength are required.

However, in the machining that is performed on the material, since the surface of the material which is roughened due to the surface being oxidized or decarburized is subjected to chucking (or the material is worked while being grasped by jaws), there occurs a case where the centers of the machined material surface and the hot forged material surface become out of alignment, and there may be caused, for example, a risk that the rotational balance of the hub 4 (the hub main body 12) which is the rotational ring is lost. As this occurs, there may be caused a fear that the rotary performance of the bearing unit becomes difficult to be maintained over a long period of time.

On the other hand, although an increase in thickness of the material to such an extent that nothing is affected by the centers which are out of alignment has been proposed to the outer ring 2 which is the stationary ring, when the proposal is adopted, not only will the material costs be increased but also the weight of the outer ring 2 is increased by the extent that the thickness of the material is so increased. Therefore, it becomes difficult to realize a reduction in overall weight of the bearing unit. In the event that the thickness of the material is increased, the machining allowance for the material when the material is machined is increased, whereby not only is the working time increased but also the working cost is increased, as a result of which the manufacturing cost of the outer ring 2 is increased.

In addition, in slow cooling after hot forging, although the material is maintained in a relatively soft state in consideration of machine working efficiency, in this case, root portions (which are preferably kept hard) of the connecting flange 2a of the outer ring 2 and the mounting flange 12a of the hub main body get soft. When machine working is performed in this state, the connecting flange 2a and the mounting flange 12a are sometimes deformed or inclined due to a pressure applied thereto when machine working is performed thereon. As this occurs, the suspension system (the knuckle) and the disc wheel cannot be fixed accurately and rigidly on the connecting flange 2a and the mounting flange 12a, respectively, as a result of which there is caused a fear that it becomes difficult to stably support the wheel of the motor vehicle on the suspension system.

To avoid this, although the thickness of the root portions of the connecting flange 2a and the mounting flange 12a may be increased to reinforce the root portions, in the event that the thickness is so increased, the overall weight of the bearing unit is increased. Since the bearing unit makes up part of the unsprung load and constitutes a bearing unit which supports the wheel directly, there is caused a fear that the lost of rotation balance and increase in weight of the bearing discussed above are linked up with a reduction in running stability and controllability of the wheel.

In addition, for example, Patent Document No. 2 proposes a technique in which a hub main body 12 is formed by performing cold forging work on a sheet material. According to this technique, the occurrence of oxidation or decarburization on the surface of the forged product can be suppressed, and the finishing accuracy can also be increased. In this case, since there is no need to perform any machining on the material, the conventional problem that the rotation balance of the hub main body 12 is lost becomes difficult to be caused. However, since the hardness of an axial end portion of the hub main body 12 becomes higher than the hardness of a root portion of a mounting flange 12a when the sheet material is subjected to cold forging, clamping work, in which the axial end portion is plastically deformed so as to lock an inner ring 16 on to the hub main body 12, becomes sometimes difficult. In addition, when the sheet material is worked to produce the hub main body 12, it becomes difficult to work the sheet material to project into a brake positioning cylindrical portion or a wheel positioning cylindrical portion, and hence, there has been a need to provide an intermittent pilot on the hub main body as seen in Patent Document No. 2 or to fit a separate pilot on the hub main body.

Then, although the development of a bearing unit is desired which enables the inner ring 16 to be locked on to the hub main body 12 with good efficiency by realizing the facilitation of clamping work, no such bearing unit has ever been made known.

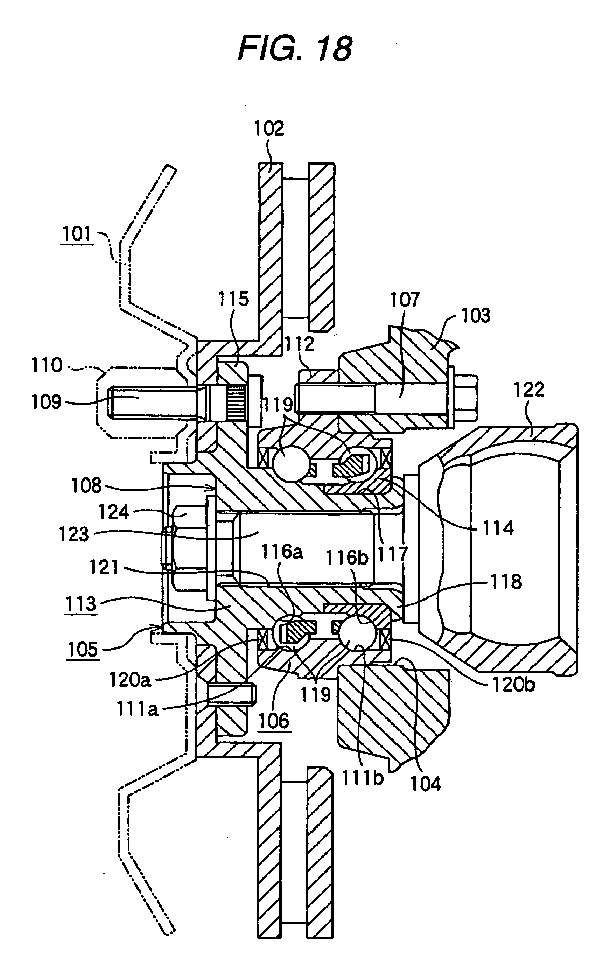

In addition, Fig. 18 shows another bearing unit (also referred to as a wheel supporting hub unit) 105 for a drive wheel. A wheel 101 which makes up a wheel of a motor vehicle and a rotor 102 which is a braking rotary member and which makes up a disc brake which constitutes a brake system are rotatably supported on a knuckle 103 which makes up a suspension system. Namely, an outer ring 106 which makes up a wheel supporting hub unit 105 is fixed into a circular supporting hole 104 portion formed in the knuckle 103 with a plurality of bolts 107. On the other hand, the wheel 101 and the rotor 102 are connected and fixed on to a hub 108 which makes up the wheel supporting hub unit 105 with pluralities of studs 109 and nuts 110. In addition, double row outer ring raceways 111a, 111b and a connecting flange 112 are formed on an inner circumferential surface and an outer circumferential surface of the outer ring 6, respectively. By connecting the connecting flange 112 to the knuckle 103 with the bolts 107, the outer ring 106 is fixed to the knuckle. 103.

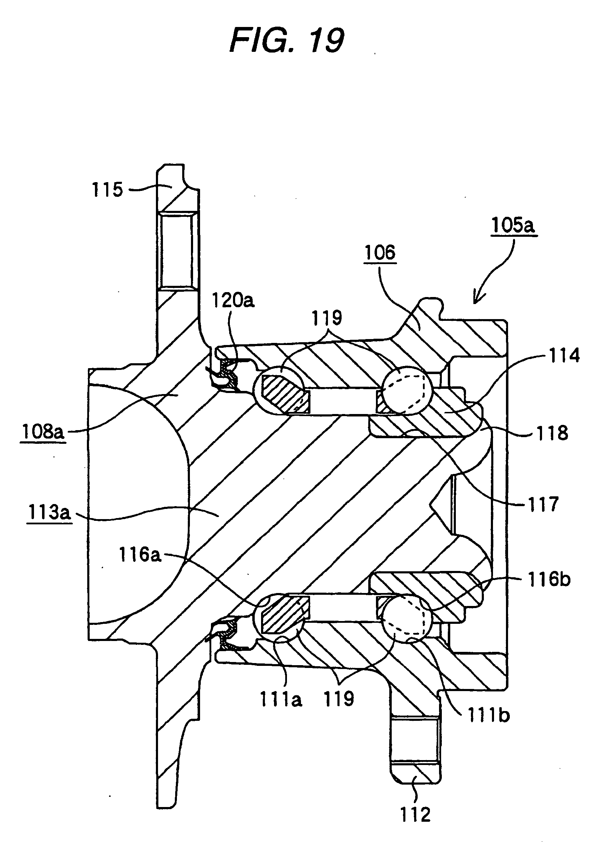

In addition, the hub 108 is made up of a hub main body 113 and an inner ring 114. Of these, a mounting flange 115 is formed on part of an outer circumferential surface of the hub main body 113 in a portion which projects from an outer end opening of the outer ring 106. Note that "out" with respect to the axial direction means the left side of Figs. 18, 19 which is an outer side of the bearing unit in a transverse direction of the vehicle with the bearing unit built on the motor vehicle. On the contrary, the right side of Figs. 18, 19 which is a central side of the bearing unit in the transverse direction of the vehicle with the bearing unit built on the motor vehicle means "in" with respect to the axial direction. The wheel 101 and the rotor 102 are connected and fixed to an outer surface of the mounting flange 115 with the studs 109 and nuts 110.

Additionally, an inner ring raceway 116a, which faces the outside outer ring raceway 111a of the double row outer ring raceways 111a, 111b, is formed on the outer circumferential surface of the hub main body 113 in an intermediate portion. In addition, the inner ring 114 is fitted on a small diameter stepped portion 117 formed similarly on an inner end portion. An inner ring raceway 116b, which faces the inside outer ring raceway 111b of the double row outer ring raceways 111a, 111b, is formed on an outer circumferential surface of the inner ring 114. The inner ring 14 configured like this is fixed to the hub main body 113 by a clamping portion 118 which is formed by plastically deforming the inner end portion of the hub main body 113 radially outwards. In addition, double row rolling elements 119, 119 are provided rollably between the outer ring raceways 111a, 111b and the inner ring raceways 116a, 116b, respectively. Note that while in the illustrated example, balls are used as the rolling elements 119, 119, in the case of an automotive hub unit which is heavy in weight, tapered rollers are sometimes used. In addition, openings at ends of the cylindrical space where the rolling elements 119, 119 are installed are hermetically sealed by seal rings 120a, 120a, respectively.

Furthermore, in the illustrated example, since the bearing unit is the wheel supporting hub unit 105 for the drive wheel (the front wheel of an FF vehicle, a rear wheel of an FR or RR vehicle, any wheel of a 4WD vehicle), a spline hole 121 is formed in a central portion of the hub 108. In addition, a spline shaft 123 which is fixedly provided at an outer end face of a constant velocity joint outer ring 122 is inserted into the spline hole 123. In association with this, a nut 124 is thread fitted on a leading end portion of the spline shaft 123, and then by fastening the nut 124 so fitted, the hub main body 113 is held between the nut 124 and the constant velocity joint outer ring 122.

Next, as a wheel supporting hub unit which has conventionally been known, Fig. 19 shows another hub unit for a driven wheel (a rear wheel of an FF vehicle, a front wheel of an FR vehicle or RR vehicle). Since the wheel supporting hub unit 105a is for a driven wheel, no spline hole is provided in a central portion of a hub main body 113a which makes up a hub 108a. Note that while in the illustrated example, an inner end face of an inner ring 114 is held by a clamping portion 118 provided at an inner end portion of the hub main body 113a, the inner end face of the inner ring 114 can also be held by a nut which is thread fitted on the inner end portion of the hub main body 113a. In this case, an external thread portion, on which the nut is to be thread fitted, is provided at the inner end portion of the hub main body 113a. The construction and function of the other portions are similar to those of the wheel supporting hub unit 105 which has been described before.

Incidentally, in the case of either of the constructions of the wheel supporting hub units 105, 105a which are configured as have been described above, a connecting flange 112 and a mounting flange 115 are formed on an outer circumferential surface of the outer ring 106 and an outer circumferential surface of the hub main body 113, 113a, respectively. As a method for manufacturing the outer ring 106 or the hub main body 113,113a on the outer circumferential surface of which the connecting flange 112 or the mounting flange 115 is formed in such a manner as to project radially therefrom, cutting is considered in addition to the plastic forming such as hot forging or cold forging.

However, in order to realize a cost reduction by improving working efficiency and securing the yield of material, plastic forming is preferably used. In addition, in the plastic forming, since the hot forging enables work to be worked in a soft state, the forming load is suppressed to a small level. On the contrary, since the extent, to which the metal materials in the constituent components are hardened, is limited (does not surpass such an extent that the hardness increases as the temperature decreases) even after the metal materials are cooled after the completion of working, a sufficient strength may not always be obtained. In addition, since a difference in thermal expansion between forging dies needs to be taken into consideration, it becomes difficult to secure dimension accuracy and shaping accuracy. On the other hand, the strength of the base of the connecting flange 112 formed on the outer circumferential surface of the outer ring 106 or the base of the mounting flange 115 formed on the outer circumferential surface of the hub main body 113a needs to be secured in order to prevent the occurrence of harmful deformation thereat whether or not a moment is exerted thereto when in use. When the outer ring 106 or the hub main body 113, 113a is formed through the hot forging, it becomes difficult to give a required strength to the base of the connecting flange 12a or the mounting flange 115 in the event that the base is left as it is. Because of this, a separate operation needs to be performed in order to increase the strength of the base, this increasing the manufacturing costs of the outer ring 106 or the hub main body 113, 113a.

In addition, with the hot forging, since the dimension accuracy becomes rough and a decarburized layer needs to be removed from the thermally treated portion, a large cutting allowance for a posterior step becomes necessary, and hence, the hot forging approach has had the problem of increased manufacturing costs.

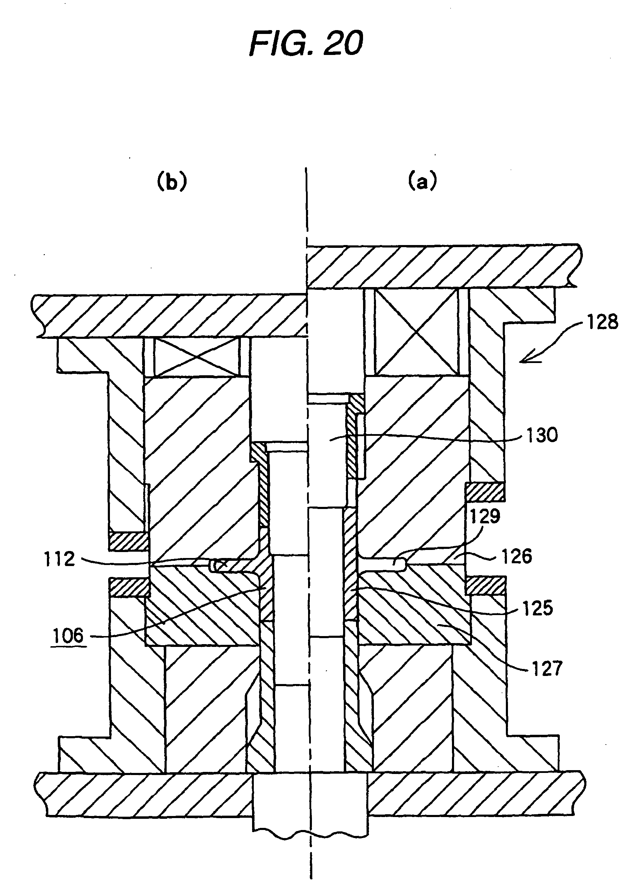

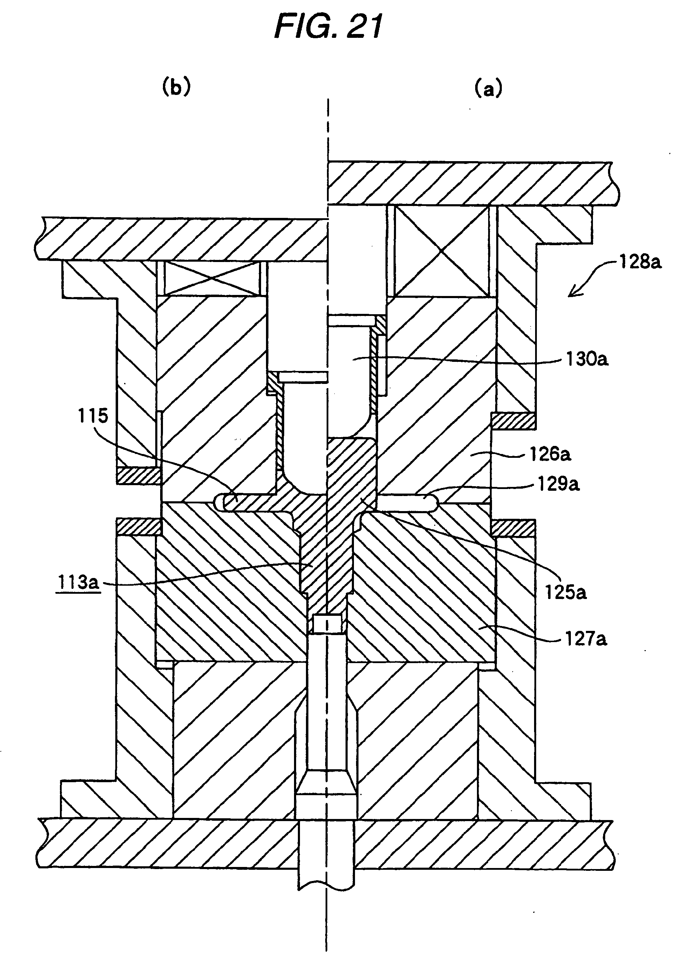

In contrast to this, as is described in Patent Document No. 3, it is considered to manufacture an outer ring 106 or a hub main body 113, 113a having on its own outer circumferential surface a connecting flange 112 or a mounting flange 115 through a side extrusion which is one of cold forging approaches. Figs. 20 to 21 show states in which an outer ring 106 or a hub main body 113a which is a raceway ring member for a bearing unit is manufactured through such a side extrusion as described in Patent Document No. 3. Note that Fig. 20 shows the state in which the outer ring 106 which makes up the wheel supporting rolling element bearings 105, 105a for a drive wheel which are shown in Figs. 18 to 19 is formed and Fig. 21 shows the state in which the hub main body 113a which makes up the wheel supporting rolling element bearing 105a for a driven wheel which is shown in Fig. 19 is formed.

In either of the cases, a material 125, 125a of which an outer circumferential surface is made into a cylindrical surface or a stepped cylindrical surface is set within a mold 128, 128a which is made up of an upper die 126,126a and a lower die 127, 127a which have inner surface configurations matching an outer surface configuration of the connecting flange 12 or the mounting flange 15. In this state, portions of the outer circumferential surface of the material 125, 125a which exclude a portion where the connecting flange 112 or the mounting flange 115 is to be formed are held. On the other hand, a space 129, 129a which matches the flanges 112, 115 exists around the perimeter of the portion where the connecting flange 112 or the mounting flange 115 is to be formed. In the event that the material 125, 125a is pressed axially (the axial dimension is contracted) by a punch 130, 130a in this state, the metal material which has then nowhere to escape as the axial dimension shortens is pushed into the space 129, 129a, whereby the connecting flange 112 or the mounting flange 115 is eventually formed on part of the outer circumferential surface.

In the event that the outer ring 106 or the hub main body 113a which includes the connecting flange 112 or the mounting flange 115 is manufactured through the side extrusion that has been described above, the strength of the base of the connecting flange 112 or the mounting flange 115 which is formed on the outer circumferential surface of the outer ring 106 or the hub main body 113a can be increased Namely, since the connecting flange 112 or the mounting flange 115 including the base is work hardened, the necessity of a posterior treatment to increase the strength of the base is obviated, or even though such a posterior treatment is necessary, a simple posterior treatment will suffice, and hence, a reduction in manufacturing costs of the outer ring 106 or the hub main body 113a is realized. In addition, since the difference in thermal expansion between the forging dies does not have to be taken into consideration, the dimension accuracy and shaping accuracy are easy to be secured, and the posterior working can be simplified or omitted, thereby making it possible to realize the reduction in manufacturing costs from this aspect.

However, in order to increase further the strength of the base of the connecting flange 112 or the mounting flange 115 with a view to realizing a reduction in weight or the like, there still remains a room for improvement even with the manufacturing method described in Patent Document No. 3 that has been described above. Namely, as is widely known in the field of automotive technologies, in order to realize an increase in driving performance centered at riding comfort, steering stability and the like or fuel economy, it is effective to reduce the so-called unsprung load which is the weight of the members which lie closer to the road surface than the spring which makes up the suspension system. Needless to say, the outer ring 106 or the hub main body 113a which includes the connecting flange 112 or the mounting flange 115 constitutes the unsprung load, and reducing the weight of the outer ring 106 or the hub main body 113a (as well as the hub main body 113) even slightly becomes very advantageous from the viewpoint of increasing the aforesaid performances.

In order to enable a reduction in thickness of the connecting flange 112 or the mounting flange 115 with a view to reducing the weight of the outer ring 106 or the hub main body 113, 113a, it becomes advantageous to increase the strength of the connecting flange 112 or the mounting flange 115, in particular, the strength of the base to which a large moment is exerted while the vehicle is turning. From this viewpoint, the manufacturing method described in Patent Document No. 3 above still has the room for improvement.

In addition, in the case of a bearing unit of this type, a wheel mounting surface of the connecting flange 12 or a vehicle body mounting surface of the mounting flange 115 needs to be finished with good flatness accuracy in order to secure runout accuracy. In the related art disclosed in Patent Document No. 3, finishing the mounting surface with good flatness accuracy is designed to be implemented by cutting.
However, when attempting to finish the mounting surface by cutting, since conventionally, the whole area of the mounting surface of the mounting flange 112 or the connecting flange 115 was such as to be brought into abutment with the wheel or the vehicle body, the whole area of the mounting surface needed to be cut. Consequently, a problem has still remained that should be solved with respect to the manufacturing costs of the flanged raceway ring member (time related manufacturing costs or labor-hour related manufacturing costs).

A further description of a state of the art bearing unit is disclosed in EP 1 647 418 A2. The preamble of claim 1 is determined by this bearing unit.
[0034a] Patent Document No. 1: Japanese Patent Unexamined Publication JP-A-2005-256897
Patent Document No. 2: Japanese Patent Unexamined Publication JP-A-2003-25803
Patent Document No. 3: Japanese Patent Unexamined Publication JP-A-2006-111070

### Disclosure of the Invention

### Problem that the Invention is to Solve

The invention has been made in view of the situations, and a first object thereof is to a low-cost bearing unit having superior running stability and controllability which can maintain a constant rotational performance over a long period of time by stably supporting a wheel on a suspension system of a motor. A second object is to provide a bearing unit which can lock an inner ring on the other raceway ring with good efficiency by realizing the facilitation of clamping work. Furthermore, a third object is to realize a construction and a manufacturing method and apparatus for obtaining a light bearing member for a bearing unit and a bearing unit for low costs. In addition, a fourth object is to provide a bearing unit which can reduce costs associated with plane finishing while maintaining plane finishing accuracy with which a flange of a wheel or vehicle body mounting plane is finished. Means for Solving the Problem

With the present invention a bearing unit according to claim 1 should be provided, a further aspect of the inventive bearing unit is defined in claim 2.

According to a first aspect of the invention which attains the first object, there is provided a bearing unit including:
one raceway ring which is mounted on a vehicle body;
the other raceway ring which is disposed to face the one raceway ring and is mounted on a wheel; and
a plurality of rolling elements which are disposed rollably between raceway surfaces which are formed, respectively, on facing surfaces of both the raceway rings, wherein
at least either of the raceway rings has a flange for mounting on the vehicle body or the wheel, wherein
the raceway rings are formed entirely through cold forging with no machining process given to a surface of the flange, while a quenching and tempering treatment by electromagnetic induction and grinding are given to at least the raceway surfaces.

In addition, according to a second aspect of the invention, there is provided a bearing unit as set forth in the first aspect,
a positioning cylindrical portion which implements a radial positioning of the wheel is provided on the other raceway ring monolithically and continuously along a circumferential direction, and
the positioning cylindrical portion is formed by cold forging without performing the machining process on a surface thereof.

### Advantage of the Invention

According to the first aspect of the invention, the low cost bearing unit having the superior running stability and controllability can be realized which can maintain a constant rotational performance over a long period of time by stably supporting the wheel on the suspension system. Further, namely, since the flange is formed on the outer circumferential surface of the bearing unit raceway ring member by the side extrusion which is the cold plastic forming, the forming efficiency is improved and the yield of material is secured, thereby making it possible to realize a reduction in costs. In addition, since the hardness of the flange is increased higher than the hardness of the material due to work hardening in association with the cold plastic forming, it becomes easy to secure the strength of the flange. Moreover, in the case of the invention, since the work hardened layer which is formed by changing the outside diameter of the material is made to exist on a surface layer portion of at least the base of the flange, the strength of the base of the flange can be increased further, whereby by increasing the strength of the flange sufficiently, the thickness of the flange is reduced so as to facilitate the realization of a reduction in weight of the bearing unit raceway ring member and hence a reduction in weight of the bearing unit.

### Brief Description of the Drawings

[Fig. 1] A drawing showing a process for cold forging a driven wheel hub, of which (a) is a step of preparing a billet, (b) and (c) are drawing steps, (d) is a side extrusion step, and (e) is a side extrusion finalizing step.
[Fig.2] A drawing showing a process for cold forging a stationary ring (one of raceway rings), of which (a) is a step of preparing a billet, (b) is a front extrusion step, (c) is a rear extrusion step, (d) is an ironing step, and (e) is a side extrusion step.
[Fig. 3] (a) is a sectional view of a hub main body (the other raceway ring member) of a drive wheel which is cold closed die forged, and (b) is a sectional view of a hub main body (the other raceway ring member) of a driven wheel which is cold closed die forged.
[Fig. 4] A drawing showing a process for cold closed forging a driven wheel hub main body, of which (a) is a step of preparing a billet, (b) and (c) are drawing steps, (d) is a side extrusion step, and (e) is a side extrusion finalizing step.
[Fig. 5] A drawing showing the configuration of a bearing unit of second and half generation, of which (a) is a sectional view of a bearing unit for a drive wheel, and (b) is a sectional view of a bearing unit for a driven wheel.
[Fig. 6] Sectional views and an end view showing a first example of an embodiment of the invention in the order of forming steps.
[Fig. 7] An enlarged view of a portion X in Fig. 6.
[Fig. 8] A sectional view showing a state in which a side extrusion is carried out in the first example.
[Fig. 9] An enlarged view of a portion Y in Fig. 8.
[Fig. 10] Sectional views and an end view showing a second example of the embodiment of the invention in the order of forming steps.
[Fig. 11]A schematic sectional view showing an embodiment of a bearing unit of the invention.
[Fig. 12] A schematic sectional view of a mold which is used in a half die cutting step, which shows a state in the half die cutting step is carried out.
[Fig. 13] A drawing schematically showing a step example 1.
[Fig. 14] A drawing schematically showing a step example 2.
[Fig. 15] An enlarged sectional view showing a half die cutting step.
[Fig. 16] (a) is a sectional view showing the configuration of a bearing unit for a drive wheel, and (b) is a sectional view showing the configuration of a bearing unit for a driven wheel.
[Fig. 17] (a) is a sectional view showing a hub for a drive wheel and one of raceway rings in an exploded fashion, and (b) is a sectional view showing a hub for a driven wheel and one of raceway rings in an exploded fashion.
[Fig. 18] A sectional view showing another example of a wheel supporting hub unit for a drive wheel with the hub unit assembled on a knuckle.
[Fig. 19] A sectional view showing another example of a wheel supporting hub unit for a driven wheel with the hub unit assembled on a knuckle.
[Fig. 20] A sectional view showing a state in which an outer ring which makes up a wheel supporting bearing unit is manufactured by a conventionally known side extrusion process by a state immediately before the start of the process and a state immediately after the completion of the process.
[Fig. 21] A sectional view showing a state in which a hub main body which makes up a wheel supporting bearing unit for a driven wheel is manufactured by a conventionally known side extrusion process by a state immediately before the start of the process and a state immediately after the completion of the process.

### Description of Reference Numerals

2, 106, 204 outer ring (one of raceway rings, outside diameter side raceway ring member);
2a,112, 204c connecting flange;
2s, 111a, 111b outer ring raceway;
4,108, 108a, 201 hub (the other raceway ring);
4s,116a, 116b inner ring raceway;
6, 8, 119 rolling element;
12, 113, 113a, 202 hub main body (the other raceway ring member, inside diameter side raceway ring member);
12a, 115, 202c mounting flange;
12c axial end portion (clamping area) of the other raceway ring member; 101 wheel;
102 rotor;
103 knuckle;
104 supporting hole;
105,105a wheel supporting hub unit;
107 bolt;
109, 202g stud (bolt);
110 nut;
114 inner ring;
117 small diameter stepped portion;
118 clamping portion;
120a, 120b seal ring;
121 spline hole;
122 constant velocity joint outer ring;
123 spline shaft;
124 nut;
125, 125a material;
126, 126a, 126b upper die;
127,127a lower die;
128, 128a mold;
129, 129a space;
130, 130a punch;
131 first intermediate material;
132 small diameter cylindrical portion;
133 large diameter cylindrical portion;
134 inclined portion;
135 second intermediate material;
136,136a third intermediate material;
137 die;
138 upper plate;
139 elastic structure body;
140 lower plate;
141 flange forming space;
142 lower recessed portion;
143 upper recessed portion;
144 large diameter cylindrical surface portion;
147 recess;
148 positioning cylindrical portion;
148a small diameter portion;
148b stepped portion;
148c large diameter portion;
149 knock-out pin;
150 material;
230 projecting portion

### Best Mode for Carrying out the Invention

### (First Embodiment)

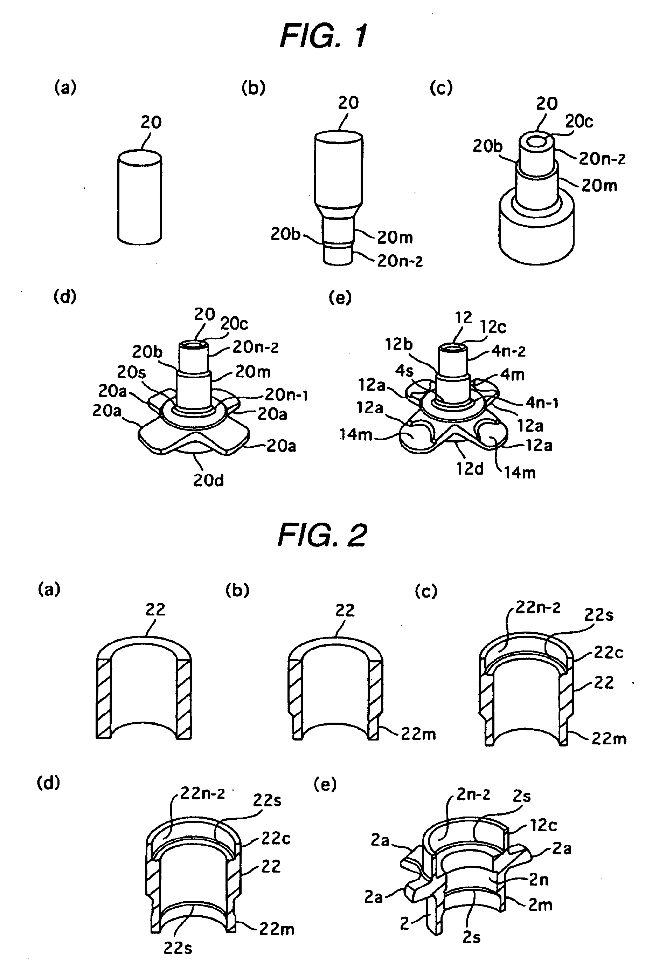

Firstly, a bearing unit according to a first embodiment of the invention will be described by reference to Figs. 1 and 2. The bearing unit of the embodiment is an improvement on the bearing unit shown Figs. 16(a), (b), and therefore, only different configurations will be described, while omitting the description of like configurations.

In the bearing unit of the embodiment, an outer ring (one raceway ring) 2 and a hub main body 12 (a raceway ring member which makes up the other raceway ring) are formed through cold forging. Here, a process for forming the hub main body 12 through cold forging will be described by reference to Fig. 1.

Firstly, as shown in Fig. 1(a), as a material for forming the hub main body 12, a cylindrical billet 20 made of a machine structural carbon steel (JISG4051) is prepared into which the material is spheroidized. Note that while the billet 20 is a solid material here because the hub main body 12 (Fig. 17(b)) for a driven wheel is considered, in the case of the hub main body 12 for a drive wheel (Fig. 17(a)), a hollow billet (not shown) may only have to be prepared.

Next, as shown in Figs. 1(b) and 1(c), a portion 20m which is to constitute an outer circumferential surface 4m of the hub main body 12 and a portion 20n-2 which is to constitute a fitting surface 4n-2 on which an outer ring 16 is fitted are formed monolithically by, for example, drawing the billet 20 through cold closed forging. At the same time as this occurs, a portion 20b which is to constitute a stepped portion 12b may be formed monolithically between both the portions 20m, 20n-2. In addition, in the drawing process, a portion 20c which is to constitute a clamping area 12c (an axial end portion) of the hub main body 12 (the other raceway ring member) is formed monolithically at the same time.

Following this, as shown in Fig. 1(d), a portion 20s which is to constitute an inner ring raceway 4s (also referred to as a rotational raceway surface), a portion 20n-1 which is to constitute a sliding surface 4n-1 of a lip seal 10a or on which the lip seal 10a slides, and a portion 20a which is to constitute a mounting flange 12a are formed monolithically by side extruding the billet 20 through cold closed forging. As this occurs, a portion 20d which is to constitute a positioning cylindrical portion (also referred to as a pilot portion) is also formed monolithically in such a manner as to continue along a circumferential direction at the same time as the portion 20a which is to constitute the mounting flange 12a is formed.

In addition, as shown in Fig. 1(e), when the side extrusion through cold closed forging is completed, a product which is formed into the same configuration as the hub main body 12 shown in Fig. 17(b) can be completed with high accuracy. In this case, the overall configuration of the hub main body 12 which includes the side extruded mounting flange 12a takes a star shape.

In this case, no machining is given to a surface (including a bolt seat surface 14m on which a hub bolt 14 is to be seated) of the mounting flange 12a and the positioning cylindrical portion 12d, and they can be used as they are. Because of this, no conventional eccenricity occurs in which the centers of the mounting flange and the positioning cylindrical portion become out of alignment, whereby for example, the rotation balance of the hub 4 (the hub main body 12) which is the rotational ring is lost. By this, a constant rotation performance of the bearing unit can be maintained over a long period of time.

In addition, by forming the mounting flange 12a by side extrusion, the positioning cylindrical portion 12d which continues in the circumferential direction can be formed monolithically in a simple and quick fashion, whereby since the manufacturing efficiency of the hub main body 12 can be increased, a reduction in manufacturing costs can be realized.

Furthermore, since work hardening can be produced in a material with cold closed forging, for example, the strength of the root portion of the mounting flange 12a can be increased. In this case, since a reduction in thickness of the root portion of the mounting flange 12a can be realized, a reduction in weight of the hub main body 12 can be realized by such an extent that the thickness is reduced, whereby since the unsprung load can be reduced, the running stability and controllability of the wheel can be increased.

Incidentally, in the finished article (the hub main body 12) shown in Fig. 1(e), a heat treatment and grinding are given to the sliding surface 4n-1 of the lip seal 10a, the inner ring raceway 4s and the inner ring 16 fitting surface 4n-2. In this case, a quenching and tempering treatment through electromagnetic induction is applied to an area extending from the sliding surface 4n-1 to the inner ring 16 fitting surface 4n-2 via the inner ring raceway 4s and a stepped portion 12b of the outer circumferential surface 4m.

Here, in the heating process through electromagnetic induction, for example, when a high-frequency current is applied through a coil to produce a high-frequency magnetic flux around the coil in such a state that the finished article (the hub main body 12) disposed in the coil, the finished article (the hub main body 12) can be heated by the action of induction then. As this occurs, the portion so heated is quenched by a cooling agent (for example, water), whereby quenching is given. Following this, the finished article (the hub main body 12) is heated and thereafter is cooled, whereby tempering is given.

In the quenching and tempering treatment using electromagnetic induction, the finished article (the hub main body 12) can be uniformly quench hardened. In particular, in the hub main body 12 (Fig. 17(a)) for a drive wheel which is formed of a hollow billet (not shown), since a difference in thickness between portions of the hub main body 12 becomes relatively small, the heat capacities of the portions become constant. Because of this, the depth to which quench hardening is attained is stabilized, thereby making it possible to secure a uniform strength over the whole of the hub main body 12.

After the heat treatment using electromagnetic induction that has been described above has been completed, grinding is given to the finished article (the hub main body 12). Grinding is applied to at least the sliding surface 4n-1 of the lip seal 10a, the inner ring raceway 4s, the inner ring 16 fitting surface 4n-2 and a shoe supporting surface (not shown) in such a state that for example, the surface (cold forged surface) of the mounting flange 12a is held via a backing plate by means of a magnet chuck (magnetically attracted and held) and the heat-treated surface (part of the outer circumferential surface 4m on the inner ring raceway 4s side of the hub main body 12: Fig. 17(b)) after forging is supported by a shoe (a receiving member).

In this case, in the grinding process, a grindstone made up of a diamond wheel is used. In addition, in the magnet chuck, since a state is produced in which the surface (cold forged surface) of the star-shaped mounting flange 12a is partially chucked (grasped by jaws), as the backing plate, a circumferentially continuous backing plate is used in which an outside diameter side and an inside diameter side thereof have different magnetic poles across a demagnetized material.

Next, a process for forming the outer ring 2 (the one raceway ring) through cold forging will be described by reference to Fig. 2. Note that the figure shows the configuration of the outer ring which is cut half longitudinally.
Firstly, as shown in Fig. 2(a), as a material for forming the outer ring 2, a hollow billet 22 made of a machine structural carbon steel is prepared into which the material is spheroidized. In this case, the billet 22 is a hollow material here because the outer ring 2 is formed into a hollow annular shape.

Next, as shown in Fig. 2(b), by applying a forward extrusion to the billet 22 through cold closed forging, a portion 22m which is to constitute an outer circumferential surface 2m of the outer ring 2 is formed monolithically. In this case, the portion 22m constitutes a portion of the outer circumferential surface 2m which is directed towards the wheel.

Following this, as shown in Fig. 2(c), by applying a backward extrusion to the billet 22 through cold closed forging, an annular portion 22n-2 which is to constitute a fixing surface 2n-2 to which a pack seal 10b fixed is formed monolithically. At the same time as this occurs, a portion 22s which is to constitute an outer ring raceway (also referred to as a stationary raceway surface) 2s on which rolling elements 8 (Fig. 16) roll is also formed monolithically at a root of the portion 22n-2.

Thereafter, as shown in Fig. 2(d), by ironing the billet 22 through cold closed forging, a portion 22s which is to constitute an outer ring raceway 2s on which rolling elements 6 (Fig. 16) roll is formed monolithically.

In addition, as shown in Fig. 2(e), by applying a side extrusion to the billet 22 through cold closed forging to form monolithically a connecting flange 2a, a product taking the same configuration as the outer ring 2 in Fig. 17(b) can be finished with high accuracy.

In this case, no machining is given to a surface of the connecting flange 2a and the outer circumferential surface 2m and the inner circumferential surface 2n of the outer ring 2, and they can be used as they are. Because of this, no conventional eccenricity occurs in which the centers of the connecting flange and the outer ring become out of alignment, whereby the rotation balance of the bearing is lost. By this, a constant rotation performance of the bearing can be maintained over a long period of time.

In addition, since work hardening can be produced in the material by forming the connecting flange 2a by side extrusion, for example, the strength of a root portion of the connecting flange 2a can be increased. In this case, since a reduction in thickness of the root portion of the connecting flange 2a can be realized, a reduction in weight of the outer ring 2 can be realized by such an extent that the thickness is reduced, whereby since the unsprung load can be reduced, the running stability and controllability of the wheel can be increased.

Incidentally, a heat treatment and grinding are given to the finished article (the outer ring 2) shown in Fig. 2(e). In this case, when grinding the outer ring raceway 2s, the outer circumferential surface 2m which is the cold die formed surface is used as it is as a reference plane. Because of this, grinding can be performed on the outer ring raceway 2s with high accuracy, whereby the misalignment in center between the outer circumference 2m and the outer ring raceway 2s can be suppressed to a least level.

In addition, since the necessity of increasing the thickness of the outer ring 2 to such an extent that the effect of the center misalignment can still be prevented is obviated by forming monolithically the outer ring 2 through cold forging, not only a reduction in weight of the outer ring 2 but also a reduction in weight of the whole bearing unit can be realized. When a further roundness is required for the outer ring 2, a shaving process may be given to the outer ring 2 using a press machine after cold forging or heating so as to shave off the outer circumferential surface 2m thinly.

In addition, in the process of heating the outer ring 2, the aforesaid electromagnetic induction quenching and tempering treatment may only have to be applied to an area extending from the fixing surface 2n-1 to which the seal lip 10a (Fig. 16(a)) is fixed to the fixing surface 2n-2 to which the cover 10c (Fig. 16) is fixed via the respective outer ring raceways 2s on the inner circumferential surface 2n. Since the outer ring 2 is formed by the hollow billet 22, the thicknesses of portions thereof can be made relatively thin. Since the thermal capacities of the portions can be made constant due to the thickness being so thinned, the dept to which quench hardening is attained is stabilized, thereby making it possible to secure uniform strength over the whole of the outer ring 2.

In addition, as materials for cold forging the outer ring 2 and the hub main body 12, for example, pipe stock or sheet stock may be used in addition to the billet stock made of machine structural carbon steel.
In addition, while in the embodiment, the flange (the connecting flange 2a, the mounting flange 12a) is formed monolithically by the side extrusion process, the invention is not limited thereto, and hence, a forming process may be adopted in which a flange is extended radially step by step. For example, an upsetting process is performed on a portion of a material which is to constitute a flange, and an upsetting process is performed again after a backward extrusion process has been performed on the portion so upset, so that a flange may be caused to extend radially step by step.

### (Second Embodiment)

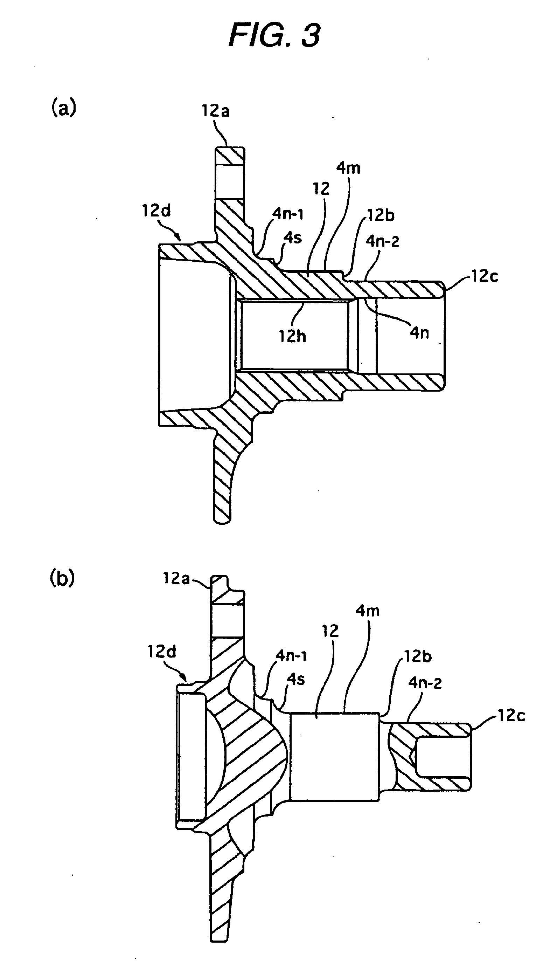

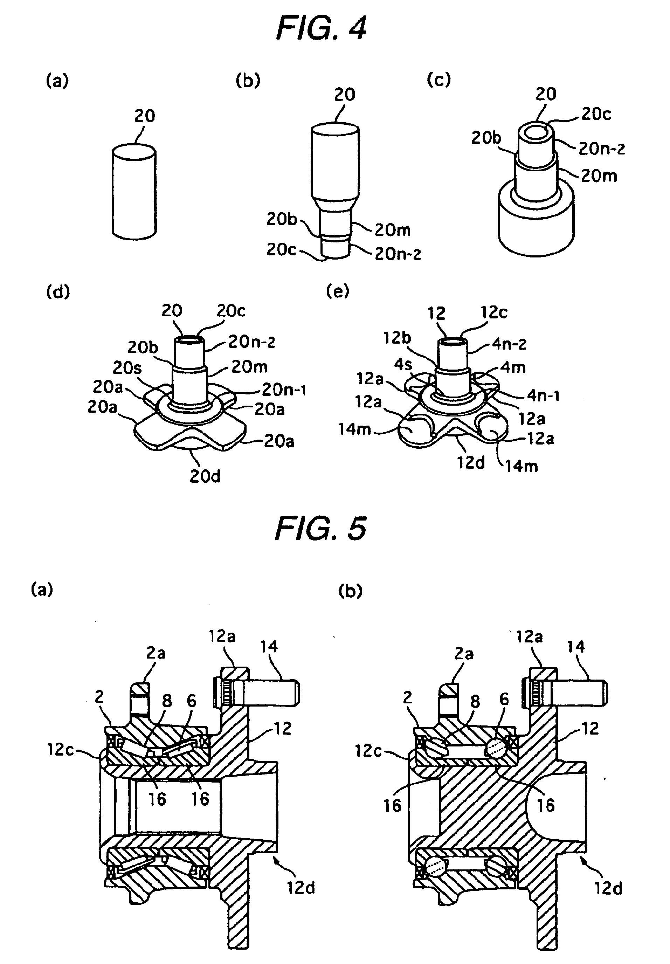

Next, a bearing unit according to a second embodiment of the invention will be described by reference to Figs. 3 and 5. Note that since the bearing unit of the embodiment is also an improvement on the bearing unit shown Figs. 16(a), (b), only different configurations will be described below, while omitting the description of like configurations will.

In the bearing unit shown in Figs. 16(a) and 16(b), in order to increase the strength of the rood portion of the mounting flange 12a to some extent, the hub main body 12 is set to substantially the constant hardness on the whole, and hence, the clamping area (the axial end portion) 12 of the hub main body 12 is made difficult to be deformed plastically.

Then, in the bearing unit of this embodiment, a clamping area 12c (Figs. 3(a) and 3(b)) on an axial end portion of a hub main body (the other raceway ring member) 12 is made easy to be deformed plastically, so that an inner ring 16 can be locked on the hub main body 12 with good efficiency by clamping (bringing into tight contact) the clamping area 12c along a circumferential end portion 16s of the inner ring 16.

To realize such a configuration, the hub main body 12 may be worked through cold closed forging so that a root portion of a mounting flange 12a where a higher rotational bending strength is required is maintained relatively hard, while a relative softness is maintained in the clamping area 12c of the hub main body 12 where clamping is applied.

Here, a process for forming the hub main body 12 through cold closed forging will be described by reference to Fig. 4.
Firstly, as shown in Fig. 4(a), as a material for forming the hub main body 12, a cylindrical billet 20 made of a machine structural carbon steel is prepared into which the material is spheroidized. Note that while the billet 20 is a solid material here because the hub main body 12 (Fig. 3(b)) for a driven wheel is considered, in the case of the hub main body 12 for a drive wheel (Fig. 3 (a)), a hollow billet (not shown) may only have to be prepared.

Next, as shown in Figs. 4(b) and 4(c), a portion 20m which is to constitute an outer circumferential surface 4m of the hub main body 12 and a portion 20n-2 which is to constitute a fitting surface 4n-2 on which an outer ring 16 is fitted are formed monolithically by, for example, drawing the billet 20 through cold closed forging. At the same time as this occurs, a portion 20b which is to constitute a stepped portion 12b may be formed monolithically between both the portions 20m, 20n-2.

In addition, in the drawing process, a portion 20c which is to constitute a clamping area 12c of the hub main body 12 is formed monolithically at the same time. In this case, the billet is diametrically contracted or diametrically expanded through cold closed forging in the portion 20c. The portion 20c which is to constitute the clamping area 12c can be held relatively soft by performing such a diametrically shrinking or diametrically expanding process on to the portion concerned.

To describe specifically, in the hub main bodies 12 (Figs. 3(a) and 3(b)) for drive and driven wheels, the portion 20c which is constitute the clamping area 12c is diametrically contracted or diametrically expanded, the portion can be thinned by such an extent, whereby the hardness in the portion 20c concerned can be weakened. Since the extent to which the portion is diametrically contracted or diametrically expanded is set depending on, for example, the configuration and/or size of the hub main body 12, the magnitude of clamping force exerted on to the portion 20c concerned and the like, no specific numerical limit value is given here.

Following this, as shown in Fig. 4(d), a portion 20s which is to constitute an inner ring raceway 4s, a portion 20n-1 which is to constitute a sliding surface 4n-1 of a lip seal 10a or on which the lip seal 10a slides, and a portion 20a which is to constitute a mounting flange 12a are formed monolithically by side extruding the billet 20 through cold closed forging. As this occurs, a portion 20d which is to constitute a positioning cylindrical portion 12d is also formed monolithically in such a manner as to continue along a circumferential direction at the same time as the portion 20a which is to constitute the mounting flange 12a is formed.

According to the side extrusion through cold closed forging like this, the hardness of the portion (including the rood portion) 20a which is to constitute the mounting flange 12a becomes harder than the portion 20c which is to constitute the clamping portion 12c of the hub main body 12. This is a result from a difference in hardening produced in the billet 20.

Here, the results of a test carried out with respect to difference in work hardening will be described.

Firstly, for example, a machine structural carbon steel containing 0.50 to 0.56% of carbon was spheroidized so as to prepare a billet (material) whose hardness was adjusted to Vickers hardness HV160. Then, cold closed forging was applied to the material to form a hub main body. In this case, the hardness of a clamping area was HV200, while the hardness of a mounting flange (including a root portion thereof) was HV250 or higher, producing a difference in hardness of HV50 to 100.

When converting the difference in hardness (HV50 to 100) into a difference in tensile strength based on strength of materials, the resulting difference in tensile strength becomes about 17 to 33kgf/mm², and the result was obtained which exhibited that the strength (hardness) of the mounting flange (including the root portion thereof) was increased over the clamping area.

In addition, as shown in Fig. 4(e), when the side extrusion through cold closed forging is completed, a product which is formed into the same configuration as the hub main body 12 shown in Fig. 3(b) can be completed with high accuracy. In this case, the overall configuration of the hub main body 12 which includes the side extruded mounting flange 12a takes a star shape.

Note that while in a normal forging process, annealing is performed after the hub main body 12 is finished, annealing is a process for removing residouble row stress and reducing the hardness by changing the mechanical properties of a material. However, in the embodiment, due to the necessity of maintaining the hardness difference of HV50 to 100 between the clamping area 2c and the mounting flange 12a (including the root portion thereof), no annealing can be performed after cold closed forging.

Consequently, the hardness of the billet 20 needs to be set in consideration of a residouble row hardness in the clamping area which is desired to be maintained after cold closed forging. In this case, since the residouble row hardness of the clamping area 12c can be set arbitrarily in relation to, for example, a clamping force exerted on the clamping area 12c and the hardness of the mounting flange 12a (including the root portion thereof), no specific numerical limit value is given here.

Thus, according to the embodiment, the hardness of the mounting flange 12a (including the root portion thereof) can be set higher than the hardness of the clamping area 12c of the hub main body 12. Namely, the hardness of the mounting flange 12a (including the root portion thereof) can be set Vickers hardness HV50 or more higher than the hardness of the clamping area 12c of the hub main body 12 before clamping.

In addition, as shown in Figs. 16(a) and 16(b), the outer ring 2 is disposed on the finished hub main body 12 in such a manner as to face the hub main body 12, and a plurality of rolling elements 6, 8 and seal members are assembled thereon. After the inner ring 16 is fitted in the hub main body 12, a clamping is applied to the clamping area 12c. In this case, the hardness of the clamping area 12c of the hub main body 12 before clamping is maintained softer than the mounting flange 12a (including the root portion thereof). Because of this, the clamping area 12c can easily be clamped (brought into tight contact) along the circumferential end portion 16s of the inner ring 16. The inner ring 16 can be locked on the hub main body 12 with good efficiency.

In addition, according to the hub main body 12 of the embodiment, no machining is given to a surface (including a bolt seat surface 14m on which a hub bolt 14 is to be seated) of the mounting flange 12a and the positioning cylindrical portion 12d, and they can be used as they are. Because of this, no conventional eccenricity occurs in which the centers of the mounting flange and the positioning cylindrical portion become out of alignment, whereby for example, the rotation balance of the hub 4 (the hub main body 12) is lost. By this, a constant rotation performance of the bearing unit can be maintained over a long period of time.

In addition, by forming the mounting flange 12a by side extrusion, the positioning cylindrical portion 12d which continues in the circumferential direction can be formed monolithically in a simple and quick fashion, whereby since the manufacturing efficiency of the hub main body 12 can be increased, a reduction in manufacturing costs can be realized.

Furthermore, since the strength of the root portion of the mounting flange 12a can be increased, a reduction in thickness of the root portion can be realized, and a reduction in weight of the hub main body 12 can be realized by such an extent that the thickness is reduced, whereby since the unsprung load can be reduced, the running stability and controllability of the wheel can be increased.

In addition, in the finished article (the hub main body 12) shown in Fig. 4(e), a heat treatment and grinding are preferably given to the sliding surface 4n-1 on which the lip seal 10a slides, the inner ring raceway 4s and the fitting surface 4n-2 on which the inner ring 16 fits. In this case, a quenching and tempering treatment through electromagnetic induction may be applied to an area extending from the sliding surface 4n-1 to the inner ring 16 fitting surface 4n-2 via the inner ring raceway 4s and a stepped portion 12b of the outer circumferential surface 4m.

Here, in the heating process through electromagnetic induction, for example, when a high-frequency current is caused to flow through a coil to produce a high-frequency magnetic flux around the coil in such a state that the finished article (the hub main body 12) disposed in the coil, the finished article (the hub main body 12) can be heated by the action of induction then. As this occurs, the portion so heated is quenched by a cooling agent (for example, water), whereby quenching is given. Following this, the finished article (the hub main body 12) is heated and thereafter is cooled, whereby tempering is given.

In the quenching and tempering process using electromagnetic induction, the finished article (the hub main body 12) can be uniformly quench hardened. In particular, in the hub main body 12 (Fig. 3 (a)) for a drive wheel which is formed of a hollow billet (not shown), since a difference in thickness between portions of the hub main body 12 becomes relatively small, the heat capacities of the portions become constant. Because of this, the depth to which quench hardening is attained is stabilized, thereby making it possible to secure a uniform strength over the whole of the hub main body 12.

In addition, as with the first embodiment, as materials for cold forging the outer ring 2 and the hub main body 12, for example, pipe stock or sheet stock may be used in addition to the billet stock made of machine structural carbon steel.
Additionally, while in the embodiment, nothing is mentioned about the hardness of the area on the hub main body 12 between the clamping area 12c and the mounting flange 12a (including the root portion thereof), there is no need to maintain the hardness difference of HV50 to 100 between the two portions after clamping, and hence, any hardness may be adopted for the area concerned. For example, a hardness difference equal to or smaller than the hardness difference may be adopted, or the hardness difference may become zero.

In addition, while in the embodiment, the bearing unit of third generation is considered, the invention is not limited thereto, and hence, for example, the invention can be applied to a bearing unit of second and half generation shown in Figs. 5(a) and 5(b). Fig. 5(a) shows a bearing unit for a drive wheel, and Fig. 5(b) shows a bearing unit for a driven wheel. In this case, while the bearing unit of second and half generation is configured basically the same as the bearing unit of third generation that has been described above, double row inner rings 16 are fitted on a hub main body 12. In this case, by deforming plastically a clamping area 12c and clamping (bringing into tight contact) the clamping area 12c against the inner ring 164 lying at a side facing the wheel, the double row inner rings 16 can be locked on the hub main body 12 with good efficiency.

### (Third Embodiment)

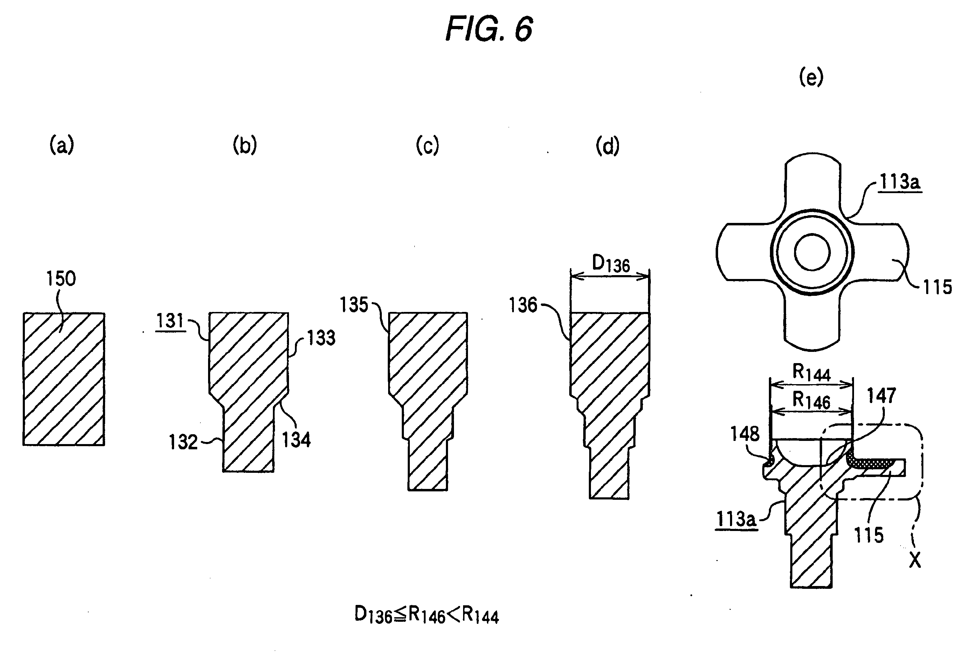

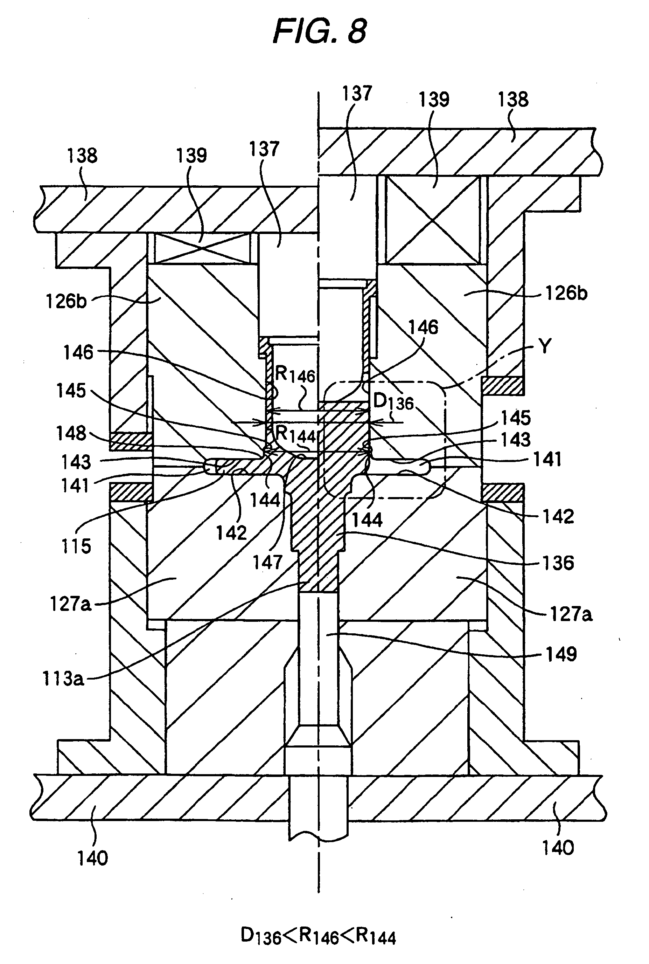

Next, a bearing unit according to a third embodiment of the invention will be described by reference to Figs. 6 to 9. This embodiment is intended to manufacture a hub main body (the other raceway ring member) 113a which makes up a wheel supporting bearing unit for driven wheel as shown in Fig. 19 described before by a manufacturing method of the invention. In addition, although Fig. 8 shows a state in which a side extrusion process is implemented, in Fig. 8, a right-half portion shows a state immediately before the start of the process, while a left-half portion shows a state immediately after the completion of the process.

To manufacture the hub main body 113a by a manufacturing method of this embodiment, firstly, a first-stage forward extrusion is performed on a cylindrical material 150 shown in Fig. 6(a), so as to obtain a stepped first intermediate material 131 as shown in Fig. 6(b). The forward extrusion, which is one of cold plastic forming methods, is implemented by pushing the material 150 into a receiving die having an inner circumferential configuration which matches an outer circumferential configuration of the first intermediate material 131 by a die. The forward extrusion can also be implemented by a general method known in the metal processing field. In addition, when a ratio of an outside diameter of a small diameter cylindrical portion 132 and an outside diameter of a large diameter portion 133 of the first intermediate material 131 is large or an inclination angle of an inclined portion 134 between those two cylindrical portions 132, 133 is steep, a floating die is used which moves together with the material 150 in an axial direction. Namely, the material 15 is pushed into the receiving die while holding an outer circumferential surface of the material 150 by the floating die (in such a manner as not to expand the outside diameter). Since a forward extrusion process using the floating die is disclosed in detail in Japanese Patent Application No. 2005-354469 and the process has nothing to do with the gist of the invention, the illustration and detailed description thereof will be omitted here.

A second-stage forward extrusion is performed on the first intermediate material 131, so as to make the material 131 into a second intermediate material 135 as shown in Fig. 6(c). This second-stage forward extrusion is performed basically in a similar way to that in which the first-stage forward extrusion is performed. Needless to say, the receiving die has to have a different inner circumferential configuration which matches an outer circumferential configuration of the second intermediate material 135. In addition, the floating die is used as required.
Next, a step-forming process for forming a stepped portion to provide an axially outboard angular type inner ring raceway 116a (refer to Fig. 19) and an upsetting process are performed on the second intermediate material 135, so as to make the second intermediate material 135 into a third intermediate material 136 as shown in Fig. 6(d). This third intermediate material 136 corresponds to the material 125a shown in the right-half portion of Fig. 21 that has been described before. The step-forming process and the upsetting process, which are performed to obtain the third intermediate material 136 from the second intermediate material 135, are implemented by pressing the second intermediate material between the receiving die and the die while holding an outer circumferential surface of the second intermediate material 136 with a die. Since these step-forming process and upsetting process are such as to be easily performed by metal processing engineers and have nothing to do with the gist of the invention, the illustration and detailed description thereof will be omitted here.

When the third intermediate material 136 is obtained, the third intermediate material 136 is used as the "materials" of the invention. Then, a side extrusion process and a process for forming the inner ring raceway 116a are performed on the third intermediate material 136 (the material), so as to obtain a hub main body 113a as shown in Fig. 6(e). the side extrusion process is performed basically by a method described in Patent Document No. 3 that has been described before. Namely, as is shown from the "right-half portion" to the "left-half portion" of Fig. 8, the third intermediate material 136 is pressed axially by a die 137 in such a state that the material 136 is held inside an upper die 126b and a lower die 127a in such a manner as to cause the metal material to escape radially outwards (caused to so flow), to thereby form a mounting flange 115. However, by devising part of an inner circumferential configuration of the upper die 126 (differentiating the inner circumferential configuration from the case of the invention described in Patent Document No. 1), a surface layer portion of a proximal end portion of the mounting flange 115 on the hub main body 113a is made to become hard sufficiently by virtue of work hardening. Hereinafter, firstly, the construction of a processing apparatus will be described.

The upper die 126b is supported below an upper plate 138 which is fixed to a ram of a press machine via an elastic structure body 139 such as a rubber, metallic spring, hydraulic cylinder and air cylinder, and the die 137 is fixed to a lower surface of the upper plate 138. In addition, the lower die 127a is fixed above a lower plate 140 which is fixed to a base of the press machine. Then, in such a state that a lower surface of the upper die 126b and an upper surface of the lower die 127a are in abutment with each other, a flange forming space 141 having an inner surface configuration which matches an outer surface configuration of the mounting flange 115 is made to be formed between the lower and upper surfaces. Namely, a lower recess 142 having a configuration corresponding to an axially inward half portion of the mounting flange 115 is formed on the upper surface of the lower die 127a, while an upper recess 143 having a configuration corresponding to an axially outward half portion of the mounting flange 115 is formed on the lower surface of the upper die 126b. Then, the flange forming space 141 is made to be defined in such a state that a portion on the upper surface of the lower die 127a which lies closer to an outside diameter side thereof and a portion on the lower surface of the upper die 126b which lies closer to an outside diameter side thereof are in abutment with each other with phases of both the recesses 142, 143 made to match each other.

In particular, in the case of the manufacturing apparatus used in this embodiment, a large diameter cylindrical surface portion 144, a stepped portion 145 and a small diameter cylindrical surface portion 146 are formed in a portion lying above the upper recess 143 by an inner circumferential surface of the upper die 126b. Namely, the large diameter cylindrical surface portion 144 is provided in the position just above the upper recess 143, the stepped portion 145 is formed in the position just above the large diameter cylindrical surface portion 144, and the small diameter cylindrical surface portion 146 is formed in the position just above the stepped portion 145. In addition, an inside diameter R₁₄₄ of the large diameter cylindrical surface portion 144 is larger than an outside diameter D₁₃₆ of an upper half portion, having a largest outside diameter, of the third intermediate material 136, which is to constitute the material (R₁₄₄ > D₁₃₆). In addition, an inside diameter R146 of the small diameter cylindrical surface portion R₁₄₆ is equal to or slightly larger than the outside diameter D₁₃₆ of the upper half portion (R₁₄₆ ≥ D₁₃₆). Furthermore, the stepped portion 145 is formed into an inclined stepped portion or to have a complex arc cross section in such a manner that the inside diameter gradouble rowly increases as it extends from the small diameter cylindrical surface portion 146 to the large diameter cylindrical surface portion 144 in order to realize a smooth continuous connection between the cylindrical surface portions 144, 146. In this way, the reason that the configuration of the stepped portion 145 is made smooth is that the configuration of a stepped portion is made smooth which is formed on an outer circumferential surface of a positioning cylindrical portion 148 in association with the stepped portion 145.

The operation will be performed as follows in which the third intermediate material 136 is plastically deformed to form the mounting flange 115 and is then formed into the hub main body 113a (or a fourth intermediate material having a configuration close to the hub main body 113a) shown in Fig. 6(e). Firstly, in such a state that the upper die 126b and the die 137 are raised together with the ram, a leading half portion (a lower half portion) of the third intermediate material 136 is inserted into a center hole in the lower die 127a, so as to be set in the lower die 127a. Following this, the upper die 126b and the lower die 127a are lowered together with the ram, so as to hold the third intermediate material 136 inside the upper die 126b and the lower die 127a as shown in the right-half portion of Fig. 8. From this state, the die 137 is lowered together with the ram, and the metal material constituting the third intermediate material 136 is caused to flow into the flange forming space 141 so as to form the mounting flange 115, while forming a recess 147 on a proximal end face of the third intermediate material 136. In addition, a peripheral portion of the recess 147 is made to constitute a positioning cylindrical portion 148 on which center holes in a disc of a disc brake and a wheel for a road wheel are fitted when in use.

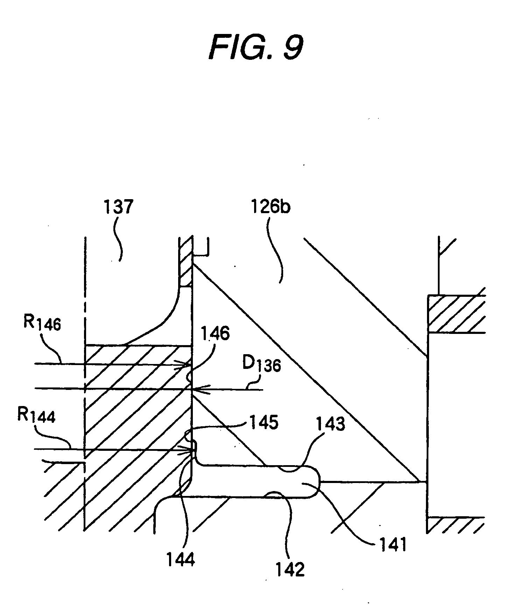

By this, as shown in Fig. 9, the positioning cylindrical portion 148 of the hub main body 113a is formed into a stepped configuration in which a small diameter portion 148a which lies at an axial end side and a large diameter portion 148c which lies at a mounting flange side so as to continue to the mounting flange 115 are connected continuously to each other by a stepped portion 148b.

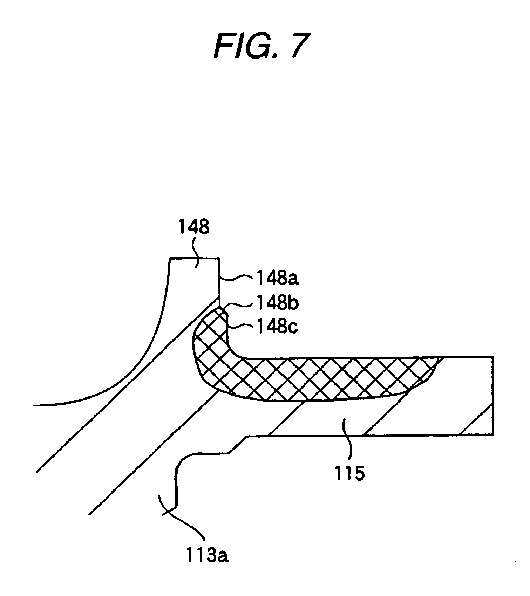

In this way, in the process in which the third intermediate material 136 is formed into the hub main body 113a (or the fourth intermediate material) while being deformed plastically, part of the metal material making up the third intermediate material 136 moves from the small diameter cylindrical surface portion 146 towards the large diameter cylindrical surface portion 144. In this moving process, the outside diameter is expanded by passing through the stepped portion 145, and at least the surface layer portion is work hardened. Following this, the work hardened portion sequentially enters the flange forming space 141. The part of the metal material is work hardened also when it enters the interior of the flange forming space 141. Because of this, the metal material which enters the flange forming space 141 to form the mounting flange 115 is deformed plastically twice to be work hardened; when it moves from the small diameter cylindrical surface portion 146 to the large diameter cylindrical surface portion 144, and when it enters the flange forming space 141. Then, a portion which has been subjected to work hardening twice (a portion shaped in Fig. 6(e) and 7) resides in a portion which is to constitute a base of the mounting flange 15, that is, a radially inward portion on an axially external surface of the mounting flange 115, an outer circumferential surface of the positioning cylindrical portion 148 and a bent portion which connects continuously these surfaces. In other words, the surface layer portion of at least the portion which is to constitute the base is made up of the portion which has been subjected to work hardening twice.

Consequently, even in the event that the thickness dimensions of the positioning cylindrical portion 148 and the mounting flange 115 are suppressed to small dimensions, a required strength can be secured, and the aforesaid advantage can be obtained. Namely, the highly strong (light in weight while securing the required strength) hub main body 113a is manufactured while ensuring the function and advantage that the mounting flange 115 can easily be formed by the side extrusion. In addition, when the side extrusion is performed in the way described above, the forming load is increased by such in extent that the work hardened layer is produced in part of the third intermediate material 136 in the midst of the forming process based on the part of the metal material passing through the stepped portion 145 (by such an extent that the work hardened portion is pushed into the flange forming space 141). However, since the work hardened layer exists partially and moreover, the thickness of the work hardened layer is limited, the increase in forming load can slightly be suppressed. Namely, although the third intermediate material 136 needs to be caused to flow radially outwards while bending the work hardened layer when the third intermediate material 136 is plastically deformed into the hub main body 113a shown in Fig. 6(e), an increase amount in forming load needed when the material is bent and caused to flow only has to be small. Because of this, an increase in load given to the respective dies such as the upper die 126b, the lower die 127a and the die 137 can be suppressed to a small level, whereby a reduction in mold life can be made small.

The hub main body 113a (or the fourth intermediate material having the configuration close to the hub main body 113a) that is obtained in the way described above is taken out from the side extrusion mold shown in Fig. 8 to be transferred to the following step and is then combined with other members (after finishing such as grinding and heat treatment has been performed thereon as required) so as to be made into a wheel supporting hub unit 105a shown in Fig. 19 that has been described before. In addition, the operation of taking out the hub main body 113a from the side extrusion mold is implemented by raising a knock-out pin 149 provided in a central portion of the lower die 127a after having raised the upper die 126b and the die 137 together with the ram and pushing out the hub main body 113a from the central hole in the lower die 127a.

### (Fourth Embodiment)

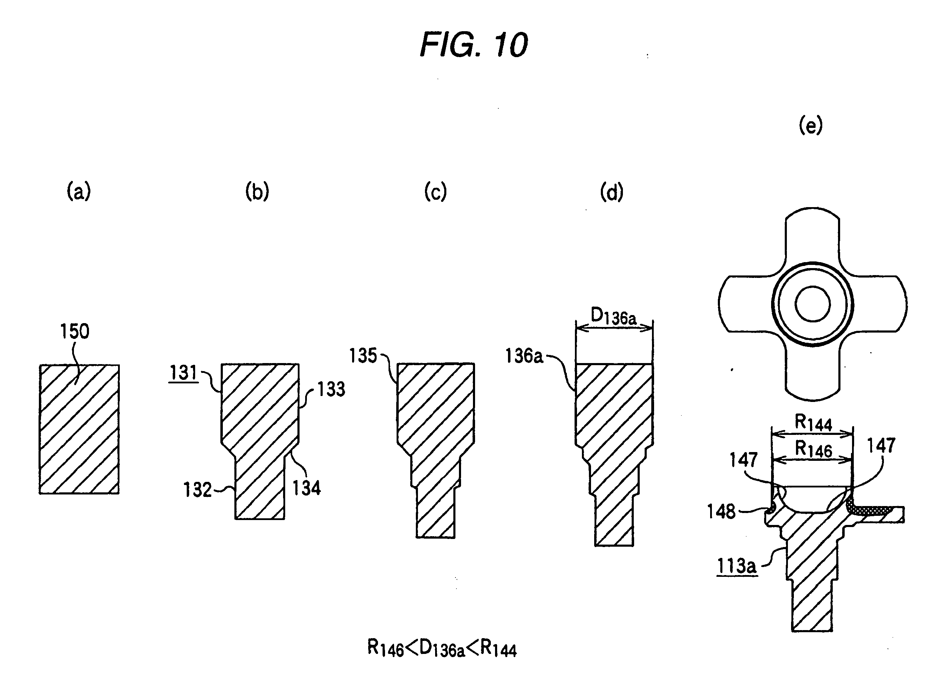

Next, a bearing unit according to a fourth aspect of the invention will be described by reference to Fig. 10. Fig. 10 shows, as with Fig. 6 that has been described before, a manufacturing method for manufacturing a hub main body 113a (or a fourth intermediate material having a configuration close to the hub main body 113a) by plastically deforming a cylindrical material 150 in order of occurrence of forming steps. A configuration and construction shown in the figure are the same as those shown in Fig. 6. In the case of this embodiment, however, an outside diameter D₁₃₆ₐ of an upper half portion of a third intermediate material 136a shown in Fig. 10(d) which has a largest outside diameter and which is to be formed into a positioning cylindrical portion 148 is made larger than the outside diameter D₁₃₆ of the third embodiment (D₁₃₆ₐ > D₁₃₆). Specifically, the outside diameter R₁₃₆ₐ of the upper half portion is made larger than an inside diameter R₁₄₆ of a small diameter side cylindrical surface portion 146 on an inner surface of an upper die 126b which makes up a manufacturing apparatus but smaller than an inside diameter R₁₄₄ of a large diameter side cylindrical surface portion 144 on the same inner surface on the same upper die (refer to Figs. 3 to 4) (R₁₄₄ > D₁₃₆ₐ > R₁₄₆).

When performing a side extrusion to form the third intermediate material 136a that has been described above into the hub main body 113a (or the fourth intermediate material), an upper end portion of the third intermediate material 136a is press fitted into the small diameter side cylindrical surface portion 146 (refer to Figs. 8 to 9) of the upper die 126b. This press fitting operation is implemented by inserting a lower half portion of the third intermediate material 136a into the lower die 127a (refer to Fig. 8) and thereafter lowering the upper die 126b. Consequently, in the case of this embodiment, in the state shown in the right-half portion of Fig. 8, the upper end portion of the third intermediate portion 136a is handled at the small diameter side cylindrical surface portion 146 of the upper die 126b, whereby a work hardened layer is formed on a surface layer portion of this upper end portion.

In the case of this embodiment, since a process which is similar to one in the third embodiment that has been described above is performed from this state, a state is produced in which a portion which has been subjected to work hardening three times (a shaded portion in Fig. 10(e)) is made to exist in a portion which is to constitute a base of a mounting flange 115 which will be formed on an outer circumferential of the hub main body 113a. Because of this, the hardness of this portion is increased further, so as to realize a further reduction in thickness and weight Since the configuration and function of other portions are similar to those of the third embodiment, the illustration and description thereof will be omitted which will repeat what has been done before.

In addition, in the third and fourth embodiments, the volume of the circular pillar-like or cylindrical material used has to be larger than the volume of a finished raceway ring member. However, even in a case where the volume of the material is made larger than the volume of the raceway ring member, the degree at which the former volume is made larger than the latter volume is preferably made as small as possible (preferably zero, that is, the volume of the material is made equal to the volume of the raceway ring member) from the viewpoint of increasing the yield of the material and facilitating a posterior process (reducing the processing time by suppressing the machining allowance).

In addition, since the properties of the surface of the material appear as they are as the properties of the surface of the finished raceway ring member, a defect such as an oxide layer, rust or damage should not be present on the surface of the material. On the other hand, in order to facilitate cold plastic forming (cold forging), the material needs to be annealed before being subjected to plastic forging, and it is inevitable for an oxide layer to be formed on the surface by the annealing so given. When taking this into consideration, it is preferable to anneal a long section (a bar material) from which the cylindrical material is obtained, thereafter remove an oxide layer produced on an outer circumferential surface of the long section by polishing, barreling, shot peening or the like and then cut the long section to a predetermined dimension from the viewpoint of obtaining a material in good quality which has no oxide layer on the surface thereof.

However, in the event that removing the oxide layer on the outer circumferential surface of the long section is difficult due to forming costs, polishing is applied to the outer circumferential surface of a short section obtained by cutting the long section of which the outer circumferential surface is covered with the oxide layer, so as to obtain the material. In this case, the oxide layer can be removed by polishing by a through feed centerless grinder. In addition, in the case of the material being formed into a cylindrical shape, since removing an oxide layer formed on an inside diameter side of the long section is difficult, the oxide layer on the inner circumferential surface needs to be removed from the short section obtained by cutting the long section. In this case, whether or not annealing is performed prior to cutting does not matter. In either case, as a method of cutting the long section, it is preferable from the viewpoint of securing accuracy to cut it by a lathe. However, when performing the removing operation of the oxide layer after cutting, the long section may be cut with a saw, provided that the properties of a cut surface can be normalized by causing media for barreling or shots for shot peening.

In addition, the third and fourth embodiments of the invention can be applied to not only the hub main body for a driven wheel that is shown in the figure but also, for example, the hub main body for a drive wheel shown in Fig. 6 or the outer ring shown in Figs. 6 to 8, provided that the raceway ring member formed is a bearing member having a projecting portion (a flange) formed on part of an outer circumferential surface thereof in such a manner as to project radially outwards.

### (Fifth Embodiment)

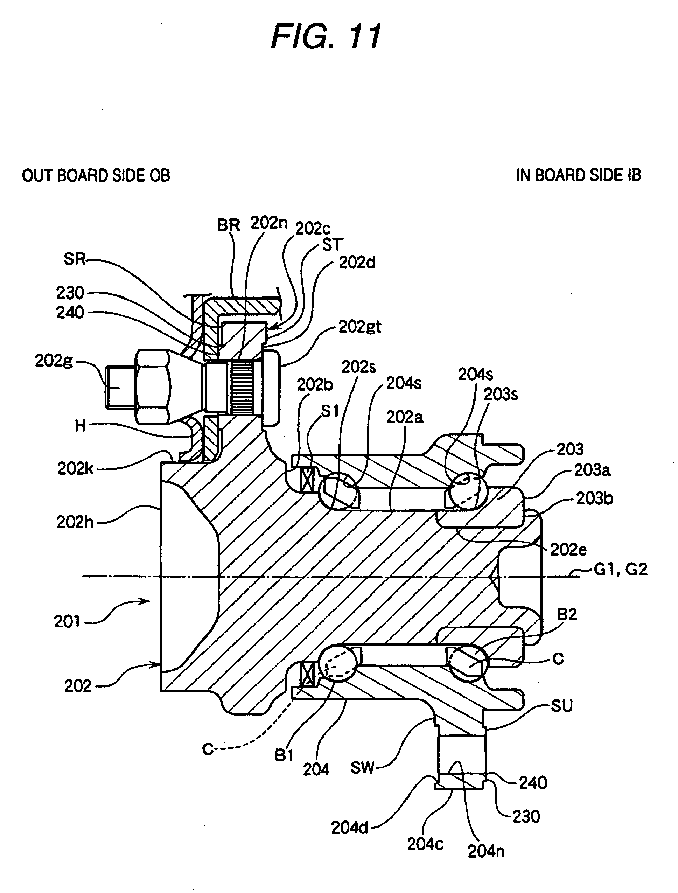

Next, a bearing unit according to a fifth aspect of the invention will be described by reference to Figs. 11 to 15. As shown in Fig. 11, the bearing unit of this embodiment is made up of a hub (also referred to as the other raceway ring) 201 which constitutes a rotational ring, an outer ring (also referred to as one raceway ring) 204 which constitutes a stationary ring, a plurality of rolling elements (balls) B1 ..., B2 ... which are built in rollably via a cage C between the hub 201 and the outer ring 204 and a seal member S1 which seals off an interior of the bearing unit between the hub 201 and the outer ring 204 at an outboard side. Scaling constructions in the known forms are selected for the seal member S1 appropriately according to specifications which can prevent the leakage of a lubricant (for example, grease) sealed within the bearing to the outside of the bearing or intrusion of foreign matters (for example, water, dust) into the interior of the bearing.

In addition, in the embodiment, while the embodiment is described in which the outer ring 204 constitutes the stationary ring and the hub 201 constitutes the rotational ring, it is still within the scope of the invention in the event that the embodiment may be such that the outer ring constitutes the rotational ring and the hub constitutes the stationary ring.

The hub 201 is made up of a hub main body 202 and an inner ring (also referred to as a separate inner ring) 203 which is provided in such a manner as to be fitted on the hub main body 202.

The hub main body 202 is made up of a solid cylindrical shaft portion 202a, four coplanar (substantially rectangular as viewed from the front) mounting flanges 202c which are provided to project in such a manner as to intersect an axial direction at right angles via an annular rising wall 202b which is provided to erect vertically from the outboard side OB of the shaft portion 202a, an inner ring raceway (a first inner ring raceway) 202s which is provided annularly on an outer circumference lying closer to the rising wall 202b, and a stepped portion 202e which is provided by depressing a predetermined outer circumferential area on an inboard side IB one step lower than a predetermined outer circumferential area where the raceway surface 202s is provided.

A brake member (a brake rotor) BR and a wheel (a wheel) H are mounted on the mounting flange 202c via bolts (hub bolts) 202g.
In addition, A positioning cylindrical portion (a pilot portion) 202h which positions the wheel is provided on the hub main body 202 on the outboard side OB across the mounting flanges 202c or an opposite side to the shaft portion 202a across the mounting flanges 202c in such a manner as to project coaxially with the shaft portion 202a with a larger diameter than the shaft portion 202a.
In this embodiment, although an outer circumference 202k of the positioning cylindrical portion 202h is made into a constant plane (a straight plane) in the axial direction, a mode may be adopted in which the outer circumference is configured into a stepped configuration which is made up of a small diameter outer circumferential portion and a large diameter outer circumferential portion in that order from the outboard side OB.

In this embodiment, the mounting flanges 202c is provided in positions which are provided at intervals of 90 degrees in such a manner as to extend radially about a center axis G1 of the shaft portion 202a as a center, and a bolt hole (a bolt mounting hole) 202n which includes the bolt 202g projecting from a wheel mounting side surface SR is provided in a predetermined position on each mounting flange 202c. In this embodiment, the bolt holes are provided, respectively, in the predetermined positions on the four mounting flanges 202c, that is, on the same circumference centered at the center axis G1 of the shaft portion 202a.

The mounting flange 202c includes a projecting portion 230 in which a peripheral area of the bolt hole 202n from which the bolt 202g projects, that is, the peripheral area having a diameter larger than the bolt diameter is made to project into a cylindrical shape towards the wheel mounting surface side SR.
In addition, a top surface of the projecting portion 230 which is provided in such a manner as to project towards the wheel mounting surface side SR, that is, the peripheral area of the bolt hole 202n constitutes a mounting surface portion 240 with which a wheel side member is brought into abutment, and when fastening a wheel side member with the bolt 202g, the wheel side is brought into abutment with the peripheral area (the mounting surface portion 240) of the bolt hole 202n for mounting.

Consequently, according to the embodiment, the wheel mounting surface of the mounting flange 202c with which the wheel side member (in this embodiment, the brake rotor BR) is brought into abutment is not the whole area of the wheel mounting surface side SR of the mounting flange 202c but only the peripheral area (the mounting surface portion 240) of the bolt hole 202n of the projecting portion 230.
Note that the projecting height of the projecting portion 230 may be such as to project from the wheel mounting side surface SR other than the projecting portion 230 and the design with respect thereto can be changed within the scope of the invention.

In addition, the projecting shape of the projecting portion is not construed as being limited to the cylindrical shape as in the embodiment and the design with respect thereto may be changed within the scope of the invention so that it can be formed into, for example, an ellipse shape, an angular cylindrical shape and the like. The mounting surface portion 240 provided on the projecting portion 230 is finished with good flatness finishing accuracy so as to secure a runout accuracy.
In addition, in the embodiment, a bolt seat surface portion 202d is provided on an opposite surface (a non-wheel mounting side surface ST) to the wheel mounting side surface SR in such a manner as to be recessed so as to accommodate therein a head portion 202gt of the bolt 202g. Note that the design with respect to the depth of the recessed bolt seat surface portion 202d can be changed within the scope of the embodiment.

The separate inner ring 203 has an inside diameter which allows it to fit on a stepped portion 202e which is recessed at the inboard side IB on an outer circumference of the shaft portion 202a of the hub main body 202 and an outside diameter which allows it to be positioned on the same plane as the outer circumference of the hub main body 202 when the separate ring 203 is fitted on the hub main body 202 and is formed into a hollow cylindrical shape which includes a raceway surface (a second inner ring raceway) 203s which is provided annularly on the outer circumference in such a manner as to be adjacent to the first inner ring raceway 202s on the same plane at the hub main body 202 side. In addition, an inboard side end portion 203a of the separate inner ring 203 has a predetermined axial thickness and is formed into a larger diameter than an outer circumferential area including the second raceway surface 203s.
In addition, an axial end face 203b at the inboard side IB of the separate inner ring 203 clamps and fixes an axial end face 203b of the inboard side end portion 203a of the separate inner ring 203 by being plastically deformed when the inboard side end portion 203a of the hub main body 202 is oscillated and clamped.

The outer ring 204 is, as shown in Fig. 11, formed into a hollow cylindrical shape having substantially the same shaft length as the shaft portion 202a of the hub 201 and is disposed in such a manner as to cover the outer circumference of the shaft portion 202a.

An inside diameter of the outer ring 204 is formed into a larger diameter compared to an inside diameter of the shaft portion 202a so as to form a predetermined in-bearing space between an outside diameter of the shaft portion 202a and itself and two outer ring raceways, that is, a first outer ring raceway 204s and a second outer ring raceway 204s, are formed annularly on the inside diameter thereof at a predetermined interval (an interval corresponding to one at which the first inner ring raceway 202s and the second inner ring raceway 202s on the hub 201 side are provided) in an axial direction.
In addition, outer ring 204 side flanges (mounting flanges) 204c are provided on an outside diameter of the outer ring 204 in such a manner as to project therefrom, and bolts, not shown, are passed therethrough to be fastened to a vehicle body (for example a suspension system, not shown) side, whereby the outer ring 204 is fixed to the vehicle body.

In this embodiment, the outer ring 204 side flanges 204c are provided in positions which are provided in positions lying at intervals of 90 degrees in such a manner as to project radially about a center axis G2 of the outer ring 204 as a center, and bolt holes 204n from which bolts, not shown, are caused to project are provided, respectively, in predetermined positions on the flanges 204c, that is, on the same circumference centered at the center axis G2 of the outer ring 204.

The mounting flange 204c includes a projecting portion 230 in which a peripheral area of the bolt hole 204n from which the bolt 202g projects is made to project into a cylindrical shape from a vehicle body mounting side surface SU.

In addition, the projecting portion 230 which is provided in such a manner as to project from the vehicle body mounting side surface SU constitutes a mounting surface portion 240 with which a vehicle body side is brought into abutment, and when fastening a vehicle body side with the bolts, the vehicle body side is brought into abutment with the peripheral area of the bolt hole 204n for mounting.

Consequently, according to the embodiment, a vehicle body mounting surface with which a vehicle body (for example, a suspension system) is brought into abutment is not the whole area of the vehicle body mounting side surface SU of the flange 204c but only the peripheral area (the mounting surface portion 240) of the bolt hole 204n of the projecting portion 230.

Note that the projecting height of the projecting portion 230 may be such as to project from the vehicle body mounting side surface SU other than the projecting portion 230 and the design with respect thereto can be changed within the scope of the invention.
In addition, the projecting shape of the projecting portion 230 is not construed as being limited to the cylindrical shape as in the embodiment and the design with respect thereto may be changed within the scope of the invention so that it can be formed into, for example, an ellipse shape, an angular cylindrical shape and the like. The mounting surface portion 240 provided on the projecting portion 230 is finished with good flatness finishing accuracy so as to secure a nmout accuracy.
In addition, in the embodiment, a bolt seat surface portion 204d is provided on an opposite surface (a non-vehicle body mounting side surface SW) to the vehicle body mounting side surface SU in such a manner as to be recessed so as to accommodate therein a head portion of the bolt Note that the design with respect to the depth of the recessed bolt seat surface portion 204d can be changed within the scope of the embodiment.

While the mounting flanges 202c of the hub main body 202 and the flanges 204c of the outer ring 204 are made, respectively, into the four independent projecting flanges, the numbers of flanges on the hub main body 202 and the outer ring 204 can be increased or decreased as required within the scope of the invention, and the projecting shapes and projecting heights can also be changed arbitrarily. In this embodiment, in the respective flanges 202c, 204c, while the adjacent flanges are separate and independent from each other at a portion other than at proximal end sides thereof, a form may be adopted in which the adjacent flanges are connected to each other in the circumferential direction, and this form falls within the scope of the invention.

Here, the projecting portions 230 which are provided, respectively, on the mounting flanges 202c of the hub main body 202 and the flanges 204c of the outer ring 204 are formed through cold forging.
Hereinafter, a method of manufacturing the hub main body 202 of the bearing unit of the embodiment will be described by taking, as an example, steps of forming, in particular, the projecting portions 230 on the mounting flanges 202c of the hub main body.
In addition, while in the embodiment, the hub main body 202 is taken as the example for description, similar steps can be adopted for steps of forming the projecting portions 230 on the flanges 204c of the outer ring 204.

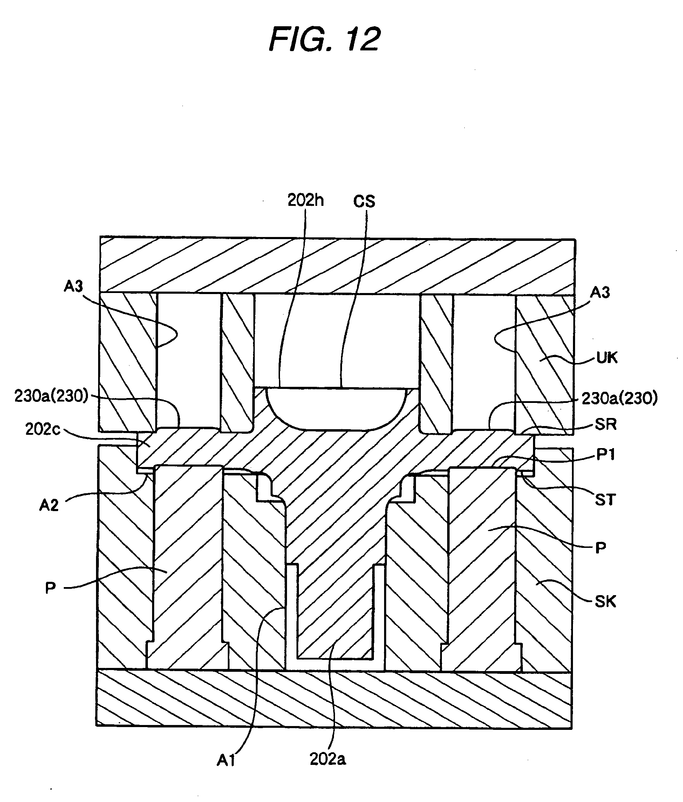

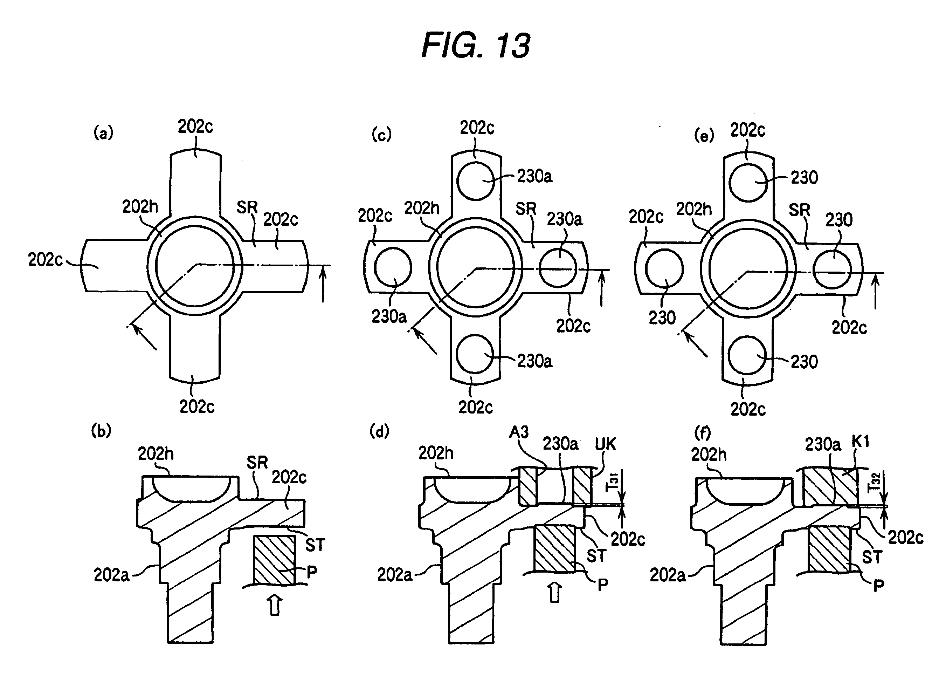

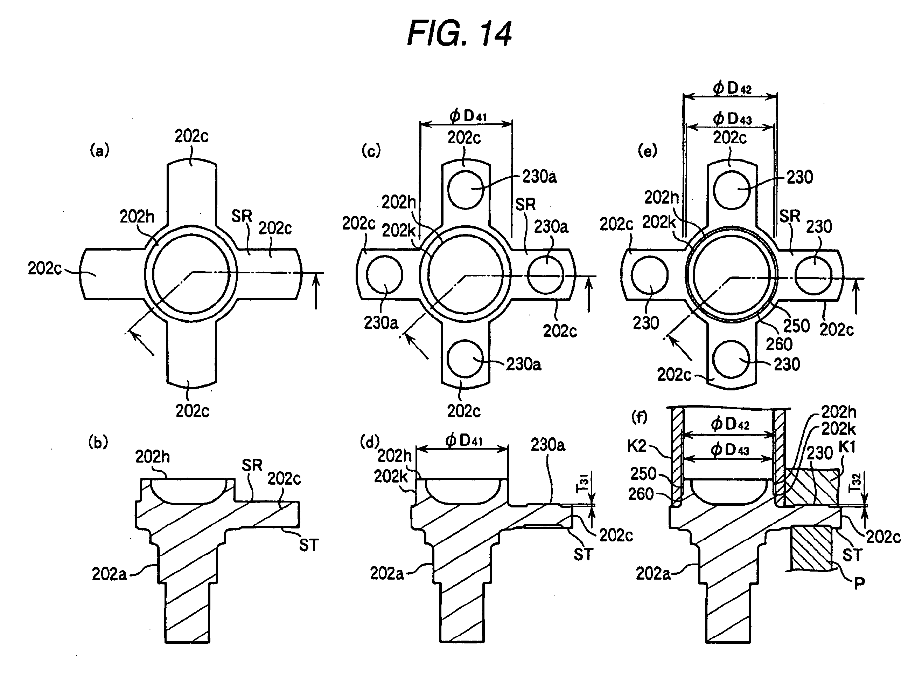

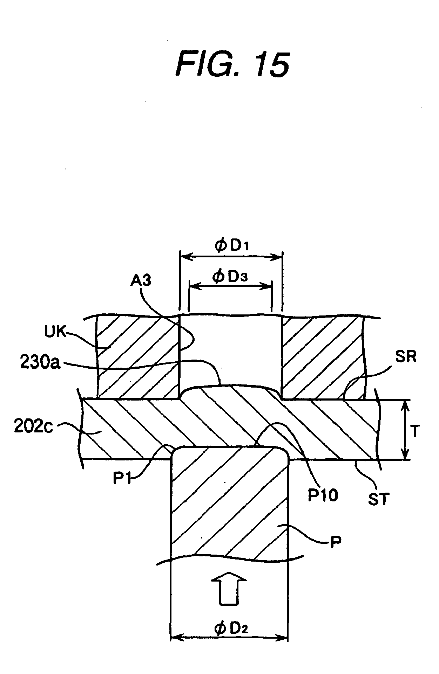

Fig. 12 shows an example of a mold for forming the projecting portions 230 on the flanges 202c of the hub main body 202 which makes up the hub 201 of the bearing unit of this embodiment. Fig.13 is a schematic diagram showing an example of projecting portion forming steps (a step example 1), Fig. 14 is a schematic diagram showing the other example of projecting portion forming steps (a step example 2), and Fig.15 is an enlarged sectional view showing a main part of Fig. 11.

Firstly, an intermediate material CS into which a shaft portion 202a, mounting flanges 202c and a positioning cylindrical portion 202h are integrated is formed from a solid bar material through steps of, for example, cold forward extrusion, cold bending, and cold side extrusion. Note that the manufacturing steps of the intermediate material CS are not such as to be construed as being limited to specific ones, and since the known cold forging steps or manufacturing methods which can be conceived within the scope of the invention can be adopted, a detailed description thereof will be omitted here.

Next, an example of projecting portion forming steps will be illustrated. Firstly, the step example 1 will be described.
In the step example 1, as shown in Fig. 13, projecting portions 230 are formed and finished according to a procedure of cold half die cutting step and cold upsetting step.

A mold used in the steps is, as shown in Fig. 12, made up of a lower die SK and an upper die UK. Fig. 12 shows a state in which the flanges 202c of the intermediate material CS are half punched and projecting portions 230 are formed on a wheel mounting surface side SR.

The lower die SK includes therein a cylindrical holding space A1 for holding the shaft portion 202a of the intermediate material CS and a plurality of holding spaces A2, rectangular as viewed from the top, which communicate with the holding space A1 and hold independently the flanges 202c, respectively, and also includes lower punches P which project, respectively, towards interiors of the holding spaces A2 with a predetermined height area.
The upper die UK includes cylindrical holes A3 which are provided at the same phase as the lower punches P of the lower die SK and in such a manner as to extend in a height direction so as to cause projecting portions 230 to be provided to project.

### (Half Punching Step)

Figs. 13 (a) and 13 (b) show the intermediate material, and this intermediate material CS is placed in the lower die SK shown in Fig. 12. As this occurs, non-wheel mounting surface sides ST of the flanges 202c of the intermediate material CS are riding, respectively, on upper end faces P1 of the lower punches P. Then, when the press is lowered to lower the upper die UK in this state, the upper die UK presses against the wheel mounting surface sides SR of the flanges 202c of the intermediate material CS (states shown in Fig. 12 and Figs. 13(c) and 13(d)).
By this, as shown in Fig. 12 and Figs. 13(c) and 13(d), half punching occurs between the holes A3 provided in the upper die UK and the lower punches P, and the material of the flanges 202c is pushed out to the wheel mounting surface side along the configurations of the holes A3, whereby projecting portions (projecting areas) 230 before upsetting are formed.

Then, in this case, the holes A3 provided in the upper die UK are preferably in the following relationship (refer to Fig. 15). Letting the diameter of the hole A3 be φD1 and the outside diameter of the lower punch P be φD2, the hole A3 should be adjusted so as to establish a relationship; φD1 ≤ φD2. In the event that the hole A3 is in a relationship; φD1 > φD2, not half die cutting but full punching results, and hence, the half die cutting step needs to be stopped in the midst thereof, and there occurs a possibility that a defect (a crack) is produced. Namely, by having the relationship described above, full punching can be prevented, and there is no need to stop the intended half die cutting in the midst thereof, whereby the projection of such a defect (a crack) can be prevented.

In addition, the upper end face of the lower punch P is formed into a curved surface R along an upper end edge (consequently, the diameter φD2 of the lower punch P becomes what results by adding the R's at the upper end edge P1 to the diameter φD3 of a flat surface P10). In addition, in this embodiment, for example, the diameter of the flat surface P10, which excludes the curved surface R of the upper end edge P1, is made to be a diameter which is equal to or larger than the diameter of a head portion 202gt of a bolt 202g.
In addition, in the event that the projecting portion 230a before upsetting is formed too large, since the flatness finishing accuracy becomes difficult to be obtained properly after upsetting, the diameter of the flat surface P10 is preferably made to be 1.5 times or less the diameter of the head portion 202gt of the bolt 202g.

### (Upsetting Step)

As shown in Figs. 13(e) and 13(f), after the half die cutting step has been finished, the projecting portion (the projecting area) 230a obtained at the half die cutting step, which has not yet been subjected to upsetting, is upset from above by a predetermined upsetting die (a die) Kl.

By performing the upsetting step after the half die cutting step, the projecting portion 230 is obtained whose top surface is finished with good flatness accuracy. In addition, needless to say, the projecting height T32 of the projecting portion 230 after upsetting becomes lower than the projecting height T31 of the projecting portion 230a before upsetting (T31 > T32).

In this embodiment, since the mounting surface portion 240 of the projecting portion 230 is finished with high flatness accuracy by forming the mounting surface portion 240 by finishing the plane thereof at the same time as the upsetting step is performed after the half die cutting step, a separate finishing step such as cutting can be omitted. Consequently, since the costly cutting step which has conventionally been performed on the mounting surface portion can be eliminated, the manufacturing costs are largely reduced. Although the whole area of the wheel mounting surface side can be finished with good flatness accuracy by cold upsetting the same without adopting the steps (the half die cutting step and the upsetting step) of the embodiment, in the event that only the projecting portion 230 is cold upset as done in the embodiment, the upsetting area can be made small. Because of this, compared to the case where the whole area is cold upset, the projecting portion 230 can be finished with good accuracy by a relatively small load.

In addition, according to the embodiment, since the bolt seat surface portion 202d which is necessary on the non-wheel mounting surface side ST is formed at the same time as the half die cutting and upsetting steps of the projecting portion 230, the bolt seat surface portion 202d can be formed with good accuracy together with the projecting portion 230 and the outer circumference 202k of the positioning cylindrical portion 202h. Consequently, a cutting on the non-wheel mounting surface side ST can also be eliminated, thereby making it possible to realize a further reduction in manufacturing costs.

Additionally, while specific illustration is omitted, a hold hole 202n is provided in the projecting portion 230 which has been formed through the steps described above in such a manner as to pass therethrough after predetermined steps have been performed thereon. In providing the bolt hole 202n in this way, the relationship between φD1 and φD2 may be made into a relationship; φD1 + (0.02 to 0.13) T (thickness of flange) = φD2.

Next, the step example 2 will be described by reference to Fig. 14 as well.
This step example is an example in which an upsetting step and an ironing step for finishing the outer circumference of a positioning cylindrical portion are performed at the same time. Note that while in this step example, the upsetting step and the ironing step are performed at the same time, the "same time" does not mean here temporally the same time but means that both the steps are performed in the manufacturing process and includes a temporal delay therebetween.

In the conventional cutting step of the mounting surface side, in addition to the mounting surface portion, the positioning portion is also cut to be finished. Namely, in the event that the accuracy (diametrical dimension, roundness, perpendicularity and the like) of the positioning portion as well as the flatness accuracy of the mounting surface portion can be secured by finishing other than cutting, the cutting step for the mounting surface side can be eliminated entirely, thereby making it possible to reduce the manufacturing costs largely. The step example 2 is made in view of this point.
Note that a half die cutting step is identical to the half die cutting step in the step example 1 described before, the description thereof will be omitted here.

In this step example, an upsetting die (a die) Kl having an area (a die lower surface area) for upsetting after a half die cutting step a projecting portion 230 which has not yet been upset and a known ironing tool K2 for ironing the whole area of an outer circumference K of a positioning cylindrical portion 202h in a stepped fashion are used (refer to Figs.14(e) and 14(f)).
Let the outside diameter of the outer circumference 202k of the positioning cylindrical portion 202h before ironing be φD41 (Figs. 14(c) and 14(d)), and the outer circumference 202k of the positioning cylindrical portion 202h after the ironing step is formed into a configuration which is made up of a small diameter portion 250 and a large diameter portion 260 arranged in that order from the outboard side OB, letting the outside diameters of the respective portions be φD43 (the outside diameter of the small diameter portion) and φD42 (the outside diameter of the large diameter portion 260), respectively. Namely, φD41 > φD42, φD42 > φD43.

Consequently, according to this step example, since the outer circumference 202k of the positioning cylindrical portion 202h can be ironed so as to obtain predetermined configuration and accuracy at the same time as the projecting portion 230 is upset to be formed using the predetermined upsetting die K1 and ironing tool K2, the outer circumference 202k of the positioning cylindrical portion 202h can be finished with good accuracy at the same time as the mounting surface portion 240 of the projecting portion 230 can be finished with good flatness accuracy. In addition, according to the step example, the perpendicularity with the mounting surface can also be secured. Consequently, the cutting step for the wheel mounting surface side SR of the flange 202c can be eliminated entirely, thereby making it possible to reduce the manufacturing costs largely.
Note that the function and advantage of the forming steps of the projecting portion 230 by the half die cutting step and the upsetting step are identical to those of the step example 1 that has been described before, the description thereof will be omitted here.

In addition, the upsetting step in the manufacturing steps can also be omitted (the manufacturing process is completed when only the steps shown in Fig. 12 and Figs. 13(c) and 13(d) have been completed). In addition, the description of the half die cutting step is the same as that of the step example 1, and hence, the description will be omitted here.
Namely, in this embodiment, since the projecting portion 230 is provided on the wheel mounting surface side SR of the flange 202c in such a manner as to project therefrom and the projecting portion 230 which so projects is made to function as the mounting surface portion 240 on which the wheel is mounted, even in the event that cutting is adopted, in place of the upsetting step, as finishing for obtaining the flatness accuracy of the mounting surface portion 240 after the half die cutting step, the surface to be finished is only the top surface of the projecting portion 230 which functions as the mounting surface portion 240 thereof.
Consequently, the surface area needing to be cut to be finished can be reduced largely, thereby making it possible to realize a reduction in manufacturing costs.

Note that the invention is not limited to the embodiments that have been described heretofore but can be modified or improved as required. The invention can be carried out by combining the embodiments without departing from the scope thereof.

The bearing units of the embodiments can be applied to not only a bearing unit that is built in a driven wheel or drive wheel of a motor vehicle but also those used in various types of vehicles including railway vehicles. In addition, while the bearing units of the embodiments are of the type which is classified into the so-called third generation (also referred to as HUB III) in which flanges are provided on one raceway ring member and the other raceway ring member, respectively, the bearing units of the embodiments can also be applied to bearing units of third generation other than those of the embodiments, bearings of the type (the second generation) in which a double row angular ball bearing in which a flange is provided at the outboard side on the outer circumference of an outer ring of a back-to-back duplex bearing is fitted on an outer circumference of a hub or the bearing of second and half generation shown in Fig. 5. Furthermore, while in the embodiments, the balls are described as functioning as rolling elements, rollers can be used without departing from the scope of the invention.

## Claims

1. A bearing unit comprising:
one raceway ring (2) which is mounted on a vehicle body;
an other raceway ring (12) which is disposed to face the one raceway ring (2) and is mounted on a wheel; and
a plurality of rolling elements (6, 8) which are disposed rollably between raceway surfaces (2s, 4s) which are formed, respectively, on facing surfaces of both the raceway rings (2, 12);
wherein at least one of the raceway rings (2,12) for mounting on the vehicle body or wheel is formed with a flange (2a, 12a), and a positioning cylindrical portion (12d) which implements a radial positioning of the wheel is provided on the at least one raceway ring (2,12) monolithically and continuously along a circumferential direction, wherein the entire surface of the positioning cylindrical portion (12d) is formed by cold forging;
and wherein
the flange (2a, 12a) has a star shaped form; both raceway rings (2) are cold forged, wherein the at least one of the raceway rings (2, 12) is including the flange (2a, 12a) cold forged;
the at least one raceway ring (2,12) is made of billet (20) made of machine structural carbon steel, which billet (20) is spheroidized and the flange (2a, 12a) is formed monolithically by side extrusion through cold closed forging;
the flange (2a, 12a) includes a bolt seat surface (14m) on which a hub bold (14) is to be seated; **characterized in that** a quenching and tempering treatment by electromagnetic induction and grinding is given to at least the raceway surfaces (2s, 4s),
and the flange including the bolt seat surface (14m) and the positioning cylindrical portion (12d) are unmachined.

## Patentansprüche

1. Lagereinheit, die umfasst:
einen Laufring (2), der an einer Fahrzeugkarosserie montiert ist;
einen weiteren Laufring (12), der gegenüber dem einen Laufring (2) angeordnet und an einem Rad montiert ist; und
eine Vielzahl von Rollelementen (6, 8), die rollfähig zwischen Laufflächen (2s, 4s) angeordnet sind, welche jeweils auf einander gegenüberliegenden Flächen der beiden Laufringe (2, 12) ausgebildet sind;
wobei zumindest einer der Laufringe (2, 12) zur Montage an der Fahrzeugkarosserie oder dem Rad mit einem Flansch (2a, 12a) ausgebildet ist, und wobei ein zylindrischer Ausrichtungsteil (12d), der eine radiale Ausrichtung des Rades ermöglicht, an dem mindestens einen Laufring (2, 12) monolithisch und durchgehend in Umfangsrichtung ausgebildet ist, wobei die gesamte Fläche des zylindrischen Ausrichtungsteils (12d) durch Kaltschmieden geformt ist; und
wobei der Flansch (2a, 12a) eine Sternform aufweist; beide Laufringe (2) kaltgeschmiedet sind, wobei zumindest einer der Laufringe (2, 12) mitsamt dem Flansch (2a, 12a) kaltgeschmiedet ist;
der zumindest eine Laufring (2, 12) aus einem Rohteil (20) aus Maschinenbau-Kohlenstoffstahl hergestellt ist, wobei das Rohteil (20) weichgeglüht (spheroidized) und der Flansch (2a, 12a) mittels Querfließpressen durch Kalt-Gesenkschmieden monolithisch geformt ist;
der Flansch (2a, 12a) eine Bolzensitzfläche (14m) aufweist, auf welche ein Nabenbolzen (14) zu setzen ist;
**dadurch gekennzeichnet, dass**
eine Abschreckung und Anlassbehandlung durch elektromagnetische Induktion sowie Schleifen zumindest an den Laufflächen (2s, 4s) durchgeführt ist;
und der Flansch einschließlich der Bolzensitzfläche (14m) und des zylindrischen Ausrichtungsteils (12s) unbearbeitet ist,

## Revendications

1. Unité de palier comprenant :
une bague à chemin de roulement (2) qui est montée sur un corps de véhicule ;
une autre bague à chemin de roulement (12) qui est disposée pour faire face à la première bague à chemin de roulement (2) et est montée sur une roue ; et
une pluralité d'éléments de roulement (6, 8) qui sont disposés en roulement entre des surfaces de chemin de roulement (2s, 4s) qui sont formées, respectivement, sur des surfaces en vis-à-vis des deux bagues à chemin de roulement (2, 12) ;
dans laquelle au moins l'une des bagues à chemin de roulement (2, 12) destinées à être montées sur le corps de véhicule ou la roue est formée avec une bride (2a, 12a) et une partie cylindrique de positionnement (12d) qui met en oeuvre un positionnement radial de la roue, est prévue sur la au moins une bague à chemin de roulement (2, 12) de manière monolithique et continue le long d'une direction circonférentielle, dans laquelle toute la surface de la partie cylindrique de positionnement (12d) est formée par forgeage à froid ;
et dans laquelle :
la bride (2a, 12a) a une forme d'étoile ; les deux bagues à chemin de roulement (2) sont forgées à froid,
dans laquelle la au moins une des bagues à chemin de roulement (2, 12) comprend la bride (2a, 12a) forgée à froid ;
la au moins une bague à chemin de roulement (2, 12) est réalisée avec une billette (20) réalisée avec de l'acier au carbone structurel d'usinage, laquelle billette (20) a une forme de sphère et la bride (2a, 12a) est formée de manière monolithique par extrusion latérale par le biais du forgeage fermé à froid ;
la bride (2a, 12a) comprend une surface de siège de boulon (14m) sur laquelle un boulon de moyeu (14) doit être installé ;
**caractérisée en ce que** :
un traitement de trempe et de revenu par induction électromagnétique et meulage est appliqué au moins sur les surfaces de chemin de roulement (2s, 4s),
et la bride comprenant la surface de siège de boulon (14m) et la partie cylindrique de positionnement (12d) ne sont pas usinées.
